(19) Europäisches Patentamt / European Patent Office / Office européen des brevets

(11) **EP 4 024 189 B1**

(12) **EUROPEAN PATENT SPECIFICATION**

(45) Date of publication and mention of the grant of the patent:
**27.05.2026 Bulletin 2026/22**

(21) Application number: **20864679.4**

(22) Date of filing: **17.09.2020**

(51) International Patent Classification (IPC):
**G06F 3/0488** *(2022.01)* **G06F 1/16** *(2006.01)*
**G06F 3/041** *(2006.01)*

(52) Cooperative Patent Classification (CPC):
**G06F 3/04886; G06F 1/1626; G06F 1/169;**
**G06F 3/0416;** G06F 2203/0339

(86) International application number:
**PCT/CN2020/115859**

(87) International publication number:
**WO 2021/052407 (25.03.2021 Gazette 2021/12)**

(54) **ELECTRONIC DEVICE CONTROL METHOD AND ELECTRONIC DEVICE**

STEUERUNGSVERFAHREN FÜR ELEKTRONISCHE VORRICHTUNG SOWIE ELEKTRONISCHE VORRICHTUNG

PROCÉDÉ DE COMMANDE DE DISPOSITIF ÉLECTRONIQUE ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2019 CN 201910883077**

(43) Date of publication of application:
**06.07.2022 Bulletin 2022/27**

(73) Proprietor: **Huawei Technologies Co., Ltd.**
**Longgang District**
**Shenzhen,**
**Guangdong 518129 (CN)**

(72) Inventors:
• **TIAN, Lihui**
**Shenzhen, Guangdong 518129 (CN)**
• **CAI, Weigang**
**Shenzhen, Guangdong 518129 (CN)**
• **CHEN, Leilei**
**Shenzhen, Guangdong 518129 (CN)**
• **WU, Dongping**
**Shenzhen, Guangdong 518129 (CN)**
• **LI, Danhong**
**Shenzhen, Guangdong 518129 (CN)**
• **LI, Hang**
**Shenzhen, Guangdong 518129 (CN)**
• **NING, Rui**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
EP-A1- 2 919 109        CN-A- 107 908 355
CN-A- 108 287 650      CN-A- 108 771 861
CN-A- 108 920 067      CN-A- 110 968 247
US-A1- 2017 315 720

## Description

### TECHNICAL FIELD

This application relates to the field of electronic device technologies, and specifically, to an electronic device control method, an electronic device and a computer-readable storage medium.

### BACKGROUND

With development of communications technologies, currently, an electronic device can support more types of applications (application, App). When an application installed on the electronic device is required to execute a corresponding function, the electronic device usually needs to receive a touch operation performed on a virtual key in a touch area. After receiving the touch operation, the electronic device determines the touched virtual key, and then performs a corresponding operation on the virtual key.

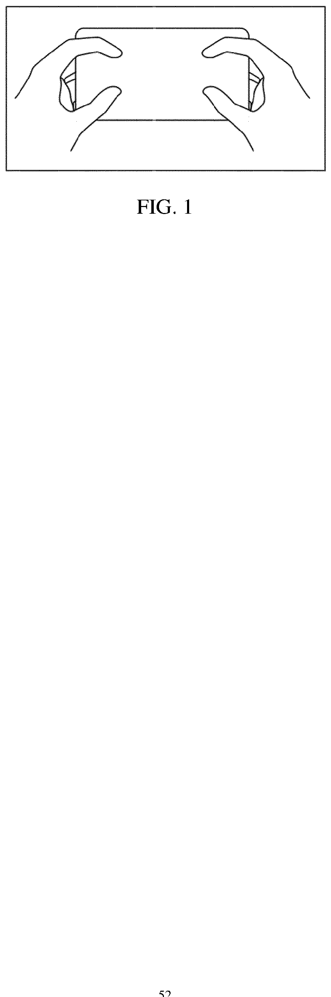

In addition, with upgrade of the application, a requirement on the touch operation of the electronic device is increasingly high. Some applications usually require a user to frequently touch the electronic device, and even in some scenarios, a key combination is required to implement touching. As shown in FIG. 1, the key combination means that a plurality of keys need to be touched at the same time, in other words, a plurality of fingers need to participate in touching together. For example, in a game scenario, touching of the key combination is often required. However, when touching is frequently performed and the key combination is touched, an interface in which the touch area is located is often blocked by a finger of the user, which affects viewing of the interface by the user. Particularly, in some application scenarios, a touch area of an electronic device is usually located on a display of the electronic device. When an interface in which the touch area is located is blocked, an image displayed on the display is usually blocked. Consequently, user experience is poor.

To resolve this problem, in the conventional technology, an external joypad is usually configured for the electronic device. In a game process, the electronic device is connected to the joypad, and a key of the joypad is used to replace a virtual key in the touch area, so that the touch area of the electronic device does not need to be touched, to avoid blocking of the touch area.

However, in a research process of this application, the inventor finds that, in the foregoing solution, because the joypad needs to be additionally configured, costs are relatively high, and it is inconvenient to carry the joypad.

EP 2919 109 A1 discloses a method of providing user interface. The method includes: detecting a first touch input within a predetermined distance from an edge of a touch screen; displaying a first cursor at a position spaced away from the first touch input in response to the first touch input; detecting a movement of the first touch input in a first area, the first area being mapped to a screen of the touch screen and determined according to a position where the first touch input occurs; and moving the first cursor in the same manner as the movement of the first touch input in the first area.

US 2017/315720 A discloses a method for performing a touch operation in a mobile device. The method includes: activating a target operation mode when monitoring a first target operation in a first user interface; mapping a first touch operation event occurring in a first position to a second touch operation event occurring in a second position in the target operation mode; and reporting the second touch operation event occurring in the second position to the first user interface for performing a corresponding operation.

CN 107908355 A discloses a picture sensing method. The method comprises: receiving a sending instruction for sending a picture to judge whether there is a preset operation for pictures to be selected within first preset duration before the sending instruction is received; if so, according to a preset rule, re-sorting the pictures to be selected in a picture selection interface, and displaying a picture selection interface after the pictures are re-sorted; and according to the sending instruction, sending the pictures selected in the re-sorted picture selection interface.

### SUMMARY

The invention is set out in the appended set of claims. When an electronic device is touched, a finger of a user blocks a touch area, but if a joypad is configured for the electronic device, costs are relatively high, and it is inconvenient to carry the joypad. To resolve this technical problem, embodiments of this application disclose an electronic device control method and an apparatus.

According to a first aspect, an embodiment of this application provides an electronic device control method, including:

After receiving a first touch operation for a first touch area, an electronic device determines first coordinates of the first touch operation in the first touch area;

the electronic device determines, based on a first mapping relationship, second coordinates having a mapping relationship with the first coordinates, where the second coordinates are located in a second touch area of the electronic device; and
the electronic device executes a response corresponding to the second coordinates.

According to the foregoing steps, after the first touch area is touched, the electronic device can execute a function that needs to be executed when the second touch area is touched. In this way, touching on the second touch area is replaced with touching on the first touch area, to reduce touching on the second touch area, thereby reducing blocking on the second touch area. According to this method, a joypad does not need to be additionally configured for the electronic device. This resolves a conventional-technology problem of high costs and inconvenience of carrying because the joypad needs to be configured.

In an optional design, the first mapping relationship includes an area parameter of a first sub-area and an area parameter of a second sub-area.

The first sub-area is a part of the first touch area, and the second sub-area is a part of the second touch area.

The first coordinates are located in the first sub-area, and the second coordinates are located in the second sub-area.

The first coordinates can be mapped to the second coordinates by using the first mapping relationship.

In an optional design, when both the first sub-area and the second sub-area are rectangles, the area parameter of the first sub-area includes coordinates of two vertices of a diagonal of the first sub-area, and the area parameter of the second sub-area includes coordinates of two vertices of a diagonal of the second sub-area, the first mapping relationship is represented by using the following formulas:

$$ X_d = X_{d1} + \frac{\left| X_{d4} - X_{d1} \right|}{\left| X_{s4} - X_{s1} \right|} * (X_s - X_{s1}), $$

and

$$ Y_d = Y_{d1} + \frac{\left| Y_{d4} - Y_{d1} \right|}{\left| Y_{s4} - Y_{s1} \right|} * (Y_s - Y_{s1}), $$

where
$(X_d, Y_d)$ are the second coordinates, $(X_s, Y_s)$ are the first coordinates, $(X_{d1}, Y_{d1})$ and $(X_{d4}, Y_{d4})$ are respectively the coordinates of the two vertices of the diagonal of the second sub-area, and $(X_{s1}, Y_{s1})$ and $(X_{s4}, Y_{s4})$ are respectively the coordinates of the two vertices of the diagonal of the first sub-area.

In an optional design, when both the first sub-area and the second sub-area are rectangles, the area parameter of the first sub-area includes a length and a width of the first sub-area and coordinates of one vertex of the first sub-area, and the area parameter of the second sub-area includes a length and a width of the second sub-area and coordinates of one vertex of the second sub-area, the first mapping relationship is represented by using the following formulas:

$$ X_d = X^1_{d1} + \frac{W^1_1}{W^1_2} * (X_s - X^1_{s1}), $$

and

$$ Y_d = Y^1_{d1} + \frac{L^1_1}{L^1_2} * (Y_s - Y^1_{s1}), $$

where
$(X_d, Y_d)$ are the second coordinates, $(X_s, Y_s)$ are the first coordinates, $W^1_1$ is a length of a side of the second sub-area in an x-axis direction, $W^1_2$ is a length of a side of the first sub-area in the x-axis direction, $L^1_1$ is a length of a side of the second sub-area in a y-axis direction, $L^1_2$ is a length of a side of the first sub-area in the y-axis direction, $(X^1_{d1}, Y^1_{d1})$ are the coordinates of the one vertex of the second sub-area, $(X^1_{s1}, Y^1_{s1})$ are the coordinates of the one vertex of the first sub-area, and there is a mapping relationship between $(X^1_{d1}, Y^1_{d1})$ and $(X^1_{s1}, Y^1_{s1})$.

In an optional design, when the first sub-area is a rectangle and the second sub-area is a line segment in an x-axis direction, the area parameter of the first sub-area includes a length and a width of the first sub-area and coordinates of one vertex of the first sub-area, and the area parameter of the second sub-area includes a length of the horizontal line, the first mapping relationship is represented by using the following formulas:

$$X_d = X^2{}_{d1} + \frac{W^2{}_1}{W^2{}_2} * (X_s - X^2{}_{s1}),$$

and

$$Y_d = Y^2{}_{d1},$$

where

$(X_d, Y_d)$ are the second coordinates, $(X_s, Y_s)$ are the first coordinates, $W^2{}_1$ is the length of the line segment, $W^2{}_2$ is a length of a side of the first sub-area in the x-axis direction, $(X^2{}_{d1}, Y^2{}_{d1})$ are coordinates of one vertex of the second sub-area, $(X^2{}_{s1}, Y^2{}_{s1})$ are the coordinates of the one vertex of the first sub-area, and there is a mapping relationship between $(X^2{}_{d1}, Y^2{}_{d1})$ and $(X^2{}_{s1}, Y^2{}_{s1})$.

Alternatively, when the first sub-area is a rectangle and the second sub-area is a line segment in a y-axis direction, the area parameter of the first sub-area includes a length and a width of the first sub-area and coordinates of one vertex of the first sub-area, and the area parameter of the second sub-area includes a length of the vertical line, the first mapping relationship is represented by using the following formulas:

$$X_d = X^3{}_{d1},$$

and

$$Y_d = Y^3{}_{d1} + \frac{L^3{}_1}{L^3{}_2} * (Y_s - Y^3{}_{s1}),$$

where

$(X_d, Y_d)$ are the second coordinates, $(X_s, Y_s)$ are the first coordinates, $L^3{}_1$ is the length of the line segment, $L^3{}_2$ is a length of a side of the first sub-area in the y-axis direction, $(X^3{}_{d1}, Y^3{}_{d1})$ are coordinates of one vertex of the second sub-area, $(X^3{}_{s1}, Y^3{}_{s1})$ are the coordinates of the one vertex of the first sub-area, and there is a mapping relationship between $(X^3{}_{d1}, Y^3{}_{d1})$ and $(X^3{}_{s1}, Y^3{}_{s1})$.

In an optional design, when the first sub-area is a rectangle and the second sub-area is a coordinate point, and the area parameter of the second sub-area includes coordinates of the coordinate point, the first mapping relationship is represented by using the following formulas:

$$X_d = X^4{}_{d1},$$

and

$$Y_d = Y^4{}_{d1},$$

, where

$(X_d, Y_d)$ are the second coordinates, and $(X^4{}_{d1}, Y^4{}_{d1})$ are the coordinates of the coordinate point.

That the electronic device executes a response corresponding to the second coordinates includes:

The electronic device determines whether a second touch operation for the second touch area is received within a first time period after the first touch operation is received; and when determining that the second touch operation is received, the electronic device executes a function corresponding to the second coordinates and the second touch operation.

The second coordinates and coordinates of the second touch operation are coordinates indicated by a key combination. According to the foregoing steps, control on the electronic device can be implemented by using the key combination. In addition, according to the solution in this embodiment of this application, a touch operation on the second touch area can be reduced, thereby reducing blocking of an interface on which the second touch area is located.

In an optional design, the method further includes:

The electronic device highlights the first sub-area and the second sub-area after receiving a first setting operation;

the electronic device receives a first selection operation for a third sub-area in the second touch area, and receives a second selection operation for a fourth sub-area in the first touch area;

the electronic device adjusts the first mapping relationship based on an area parameter of the third sub-area and an area parameter of the fourth sub-area;

after receiving a third touch operation for the fourth sub-area, the electronic device calculates, based on an adjusted first mapping relationship, fourth coordinates having a mapping relationship with third coordinates, where the third coordinates are coordinates of the third touch operation in the fourth sub-area, and the fourth coordinates are located in the third sub-area of the electronic device; and

the electronic device executes a response corresponding to the fourth coordinates.

According to the foregoing steps, the first mapping relationship can be adjusted, to meet diversified requirements of a user.

Before the electronic device determines, based on the first mapping relationship, the second coordinates having the mapping relationship with the first coordinates, the method further includes:

The electronic device determines a current application mode; and

when the current application mode is a first mode, the electronic device determines, based on the first mapping relationship, the second coordinates having the mapping relationship with the first coordinates.

In an optional design, when the electronic device is in a landscape mode, the electronic device determines that the current application mode is the first mode.

Alternatively, when the electronic device runs a preset application, the electronic device determines that the current application mode is the first mode.

The first touch area is a side touch area of the electronic device.

The second touch area is a front touch area of the electronic device.

According to a second aspect, an embodiment of this application provides an electronic device, including:

a processor and a display that has a touch function.

The display includes a first touch area and a second touch area.

The processor is configured to: after the electronic device receives a first touch operation for the first touch area, determine first coordinates of the first touch operation in the first touch area; determine, based on a first mapping relationship, second coordinates having a mapping relationship with the first coordinates, where the second coordinates are located in the second touch area of the electronic device; and then execute a response corresponding to the second coordinates.

In an optional design, the first mapping relationship includes an area parameter of a first sub-area and an area parameter of a second sub-area.

The first sub-area is a part of the first touch area, and the second sub-area is a part of the second touch area.

The first coordinates are located in the first sub-area, and the second coordinates are located in the second sub-area.

In an optional design, when both the first sub-area and the second sub-area are rectangles, the area parameter of the first sub-area includes coordinates of two vertices of a diagonal of the first sub-area, and the area parameter of the second sub-area includes coordinates of two vertices of a diagonal of the second sub-area, the first mapping relationship is represented by using the following formulas:

$$X_d = X_{d1} + \frac{\left|X_{d4} - X_{d1}\right|}{\left|X_{s4} - X_{s1}\right|} * (X_s - X_{s1}),$$

and

$$Y_d = Y_{d1} + \frac{\left|Y_{d4} - Y_{d1}\right|}{\left|Y_{s4} - Y_{s1}\right|} * (Y_s - Y_{s1}),$$

where

$(X_d, Y_d)$ are the second coordinates, $(X_s, Y_s)$ are the first coordinates, $(X_{d1}, Y_{d1})$ and $(X_{d4}, Y_{d4})$ are respectively the coordinates of the two vertices of the diagonal of the second sub-area, and $(X_{s1}, Y_{s1})$ and $(X_{s4}, Y_{s4})$ are respectively the coordinates of the two vertices of the diagonal of the first sub-area.

In an optional design, when both the first sub-area and the second sub-area are rectangles, the area parameter of the first sub-area includes a length and a width of the first sub-area and coordinates of one vertex of the first sub-area, and the area parameter of the second sub-area includes a length and a width of the second sub-area and coordinates of one vertex of the second sub-area, the first mapping relationship is represented by using the following formulas:

$$X_d = X^1{}_{d1} + \frac{W^1{}_1}{W^1{}_2} * (X_s - X^1{}_{s1}),$$

and

$$Y_d = Y^1{}_{d1} + \frac{L^1{}_1}{L^1{}_2} * (Y_s - Y^1{}_{s1}),$$

where

$(X_d, Y_d)$ are the second coordinates, $(X_s, Y_s)$ are the first coordinates, $W^1{}_1$ is a length of a side of the second sub-area in an x-axis direction, $W^1{}_2$ is a length of a side of the first sub-area in the x-axis direction, $L^1{}_1$ is a length of a side of the second sub-area in a y-axis direction, $L^1{}_2$ is a length of a side of the first sub-area in the y-axis direction, $(X^1{}_{d1}, Y^1{}_{d1})$ are the coordinates of the one vertex of the second sub-area, $(X^1{}_{s1}, Y^1{}_{s1})$ are the coordinates of the one vertex of the first sub-area, and there is a mapping relationship between $(X^1{}_{d1}, Y^1{}_{d1})$ and $(X^1{}_{s1}, Y^1{}_{s1})$.

In an optional design, when the first sub-area is a rectangle and the second sub-area is a line segment in an x-axis direction, the area parameter of the first sub-area includes a length and a width of the first sub-area and coordinates of one vertex of the first sub-area, and the area parameter of the second sub-area includes a length of the horizontal line, the first mapping relationship is represented by using the following formulas:

$$X_d = X^2{}_{d1} + \frac{W^2{}_1}{W^2{}_2} * (X_s - X^2{}_{s1}),$$

and

$$Y_d = Y^2{}_{d1},$$

where

$(X_d, Y_d)$ are the second coordinates, $(X_s, Y_s)$ are the first coordinates, $W^2{}_1$ is the length of the line segment, $W^2{}_2$ is a length of a side of the first sub-area in the x-axis direction, $(X^2{}_{d1}, Y^2{}_{d1})$ are coordinates of one vertex of the second sub-area, $(X^2{}_{s1}, Y^2{}_{s1})$ are the coordinates of the one vertex of the first sub-area, and there is a mapping relationship between $(X^2{}_{d1}, Y^2{}_{d1})$ and $(X^2{}_{s1}, Y^2{}_{s1})$.

Alternatively, when the first sub-area is a rectangle and the second sub-area is a line segment in a y-axis direction, the area parameter of the first sub-area includes a length and a width of the first sub-area and coordinates of one vertex of the first sub-area, and the area parameter of the second sub-area includes a length of the vertical line, the first mapping relationship is represented by using the following formulas:

$$X_d = X^3{}_{d1},$$

and

$$Y_d = Y^3{}_{d1} + \frac{L^3{}_1}{L^3{}_2} * (Y_s - Y^3{}_{s1}),$$

where

$(X_d, Y_d)$ are the second coordinates, $(X_s, Y_s)$ are the first coordinates, $L^3{}_1$ is the length of the line segment, $L^3{}_2$ is a length of a side of the first sub-area in the y-axis direction, $(X^3{}_{d1}, Y^3{}_{d1})$ are coordinates of one vertex of the second sub-area, $(X^3{}_{s1}, Y^3{}_{s1})$ are the coordinates of the one vertex of the first sub-area, and there is a mapping relationship between $(X^3d_1, Y^3{}_{d1})$ and $(X^3{}_{s1}, Y^3{}_{s1})$.

In an optional design, when the first sub-area is a rectangle and the second sub-area is a coordinate point, and the area parameter of the second sub-area includes coordinates of the coordinate point, the first mapping relationship is represented by using the following formulas:

$$X_d = X^4_{d1},$$

and

$$Y_d = Y^4_{d1},$$

where

$(X_d, Y_d)$ are the second coordinates, and $(X^4_{d1}, Y^4_{d1})$ are the coordinates of the coordinate point.

Executing the response corresponding to the second coordinates includes:

The processor determines whether a second touch operation for the second touch area is received within a first time period after the first touch operation is received; and
when determining that the second touch operation is received, the processor executes a function corresponding to the second coordinates and the second touch operation.

In an optional design,

after the electronic device receives a first setting operation, the processor triggers the display to highlight the first sub-area and the second sub-area;
the processor is further configured to: after the electronic device receives a first selection operation for a third sub-area in the second touch area, and receives a second selection operation for a fourth sub-area in the first touch area, adjust the first mapping relationship based on an area parameter of the third sub-area and an area parameter of the fourth sub-area;
after the electronic device receives a third touch operation for the fourth sub-area, the processor is further configured to calculate, based on an adjusted first mapping relationship, fourth coordinates having a mapping relationship with third coordinates, where the third coordinates are coordinates of the third touch operation in the fourth sub-area, and the fourth coordinates are located in the third sub-area of the electronic device; and
the processor executes a response corresponding to the fourth coordinates.

Before determining, based on the first mapping relationship, the second coordinates having the mapping relationship with the first coordinates, the processor is further configured to determine a current application mode. When the current application mode is a first mode, the processor determines, based on the first mapping relationship, the second coordinates having the mapping relationship with the first coordinates.

In an optional design, when the electronic device is in a landscape mode, the processor determines that the current application mode is the first mode.

Alternatively, when the electronic device runs a preset application, the processor determines that the current application mode is the first mode.

The first touch area is a side touch area of the electronic device.

The second touch area is a front touch area of the electronic device.

According to the solution in the embodiments of this application, coordinates in the first touch area can be mapped to coordinates in the second touch area. When the first coordinates in the first touch area are touched, the electronic device can map the first coordinates to the second coordinates, to execute a function that needs to be executed when the second coordinates in the second touch area are touched. Therefore, by touching the first touch area, the electronic device can execute the function that needs to be executed when the second touch area is touched. In this way, touching on the second touch area is replaced with touching on the first touch area, to reduce touching on the second touch area, thereby reducing blocking on the second touch area.

In addition, in the solution in the embodiments of this application, the joypad does not need to be additionally configured for the electronic device. This resolves a conventional-technology problem of high costs and inconvenience of carrying because the joypad needs to be configured.

## BRIEF DESCRIPTION OF DRAWINGS

To describe the technical solutions in this application more clearly, the following briefly describes the accompanying drawings for describing the embodiments. Definitely, a person of ordinary skill in the art may derive other drawings from these accompanying drawings without creative efforts.

FIG. 1 is a schematic diagram of control of an electronic device disclosed the conventional technology;

FIG. 2 is a schematic structural diagram of an electronic device according to an embodiment of this application;

FIG. 3 is a schematic diagram of an interface of an electronic device according to an embodiment of this application;

FIG. 4 is a schematic diagram of a working procedure of an electronic device control method according to an embodiment of this application;

FIG. 5 is a schematic diagram of a first sub-area and a second sub-area in an electronic device control method according to an embodiment of this application;

FIG. 6 is a schematic diagram of a working procedure of another electronic device control method according to an embodiment of this application;

FIG. 7 is a schematic diagram of control of an electronic device according to an embodiment of this application;

FIG. 8 is a schematic diagram of a working procedure of another electronic device control method according to an embodiment of this application;

FIG. 9 is a schematic diagram of a first sub-area and a second sub-area in an electronic device control method according to an embodiment of this application;

FIG. 10 is a schematic diagram of a fourth sub-area and a third sub-area in an electronic device control method according to an embodiment of this application;

FIG. 11 is a schematic diagram of a software structure layer according to an embodiment of this application; and

FIG. 12 is a schematic structural diagram of an electronic device according to an embodiment of this application.

## DESCRIPTION OF EMBODIMENTS

In the specification, claims, and accompanying drawings of this application, the terms "first", "second", "third" and the like are intended to distinguish different objects but do not limit a particular sequence.

In the embodiments of this application, the word such as "example" or "for example" is used to give an example, an illustration, or a description. Any embodiment or design scheme described as "example" or "for example" in the embodiments of this application should not be explained as being more preferred or having more advantages than another embodiment or design scheme. Exactly, use of the word "example" or "for example" is intended to present a relative concept in a specific manner.

For clear and brief description of the following embodiments, a related technology is briefly described first.

A plurality of types of applications are usually disposed on an electronic device. Some applications have a relatively high requirement on a touch operation. In a running process, a user needs to frequently touch a virtual key in a touch area disposed on the front of the electronic device, and even sometimes needs to implement touching by using a key combination. In this case, an interface on which the touch area is located is blocked.

If an external joypad is configured for the electronic device, and a key of the joypad is used to replace the virtual key in the touch area, to avoid blocking of the interface on which the touch area is located, the joypad needs to be additionally configured. Consequently, costs are relatively high, and it is inconvenient to carry the joypad.

To resolve the foregoing technical problem, this application discloses an electronic device control method and apparatus by using the following embodiments.

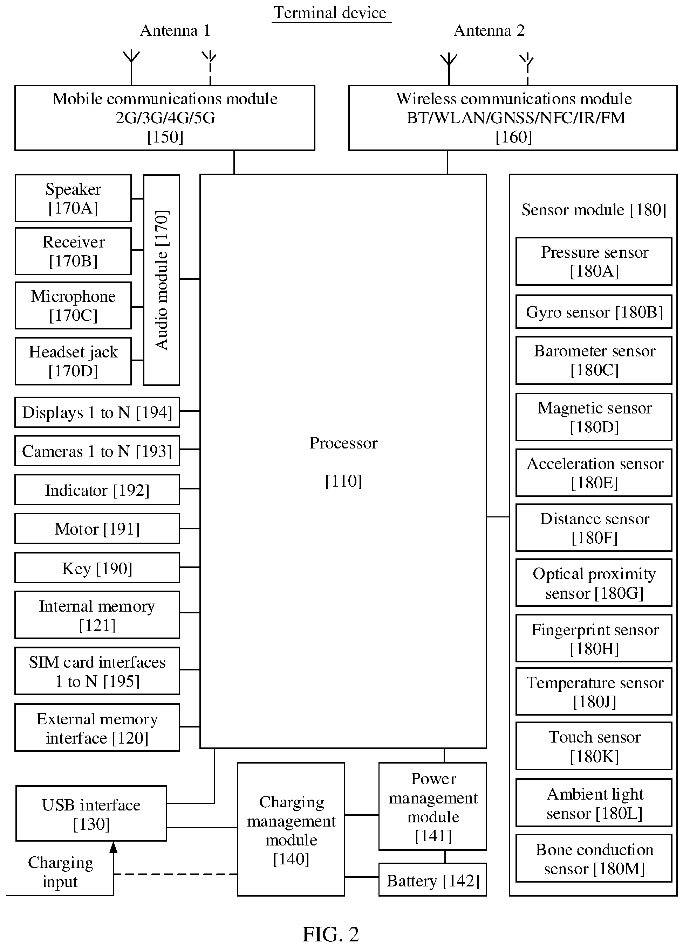

Solutions disclosed in the embodiments of this application may be applied to an electronic device on which a curved screen is mounted. The electronic device may be a device such as a mobile phone, a tablet computer, or a smart wearable device. In an example, a structure of the electronic device may be shown in FIG. 2. FIG. 2 is a schematic structural diagram of the electronic device to which the electronic device control method provided in the embodiments of this application is applied. As shown in FIG. 2, the electronic device may include a processor 110, an external memory interface 120, an internal memory 121, a universal serial bus (universal serial bus, USB) interface 130, a charging management module 140, a power management module 141, a battery 142, a sensor module 180, a key 190, a motor 191, an indicator 192, a camera 193, a display 194, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like. Further, when the electronic device is a mobile phone, the electronic device may further include: an antenna 1, an antenna 2, a mobile communications module 150, a wireless communications module 160, an audio module 170, a speaker 170A, a receiver 170B, a microphone 170C, a headset jack 170D, and a subscriber identification module (subscriber identification module, SIM) card interface 195.

It may be understood that the structure shown in this embodiment does not constitute a specific limitation on the electronic device. In some other embodiments, the electronic device may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU).

Different processing units may be independent components, or may be integrated into one or more processors.

The controller may be a nerve center and a command center of the electronic device. The controller may generate an operation control signal based on instruction operation code and a time sequence signal, to complete control of instruction reading and instruction execution.

A memory may further be disposed in the processor 110, and is configured to store instructions and data. In some embodiments, a memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be configured to: perform audio communication, and sample, quantize, and code an analog signal. In some embodiments, the audio module 170 may be coupled to the wireless communications module 160 through a PCM bus interface. In some embodiments, the audio module 170 may alternatively transmit the audio signal to the wireless communications module 160 through the PCM interface, to implement the function of answering a call through the Bluetooth headset. Both the I2S interface and the PCM interface may be configured to perform audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSI interface, to implement a display function of the electronic device.

The GPIO interface may be configured through software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C port, or the like. The USB interface 130 may be configured to connect to a charger to charge the electronic device, or may be configured to transmit data between the electronic device and a peripheral device, or may be configured to be connected to a headset for playing audio through the headset. Alternatively, the interface may be configured to connect to another electronic device such as an AR device.

It may be understood that an interface connection relationship between the modules shown in this embodiment is merely an example for description, and does not constitute a limitation on the structure of the electronic device. In some other embodiments of this application, the second electronic device may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device. The charging management module 140 supplies power to the electronic device through the power management module 141 while charging the battery 142.

The power management module 141 is configured to connect the battery 142, the charging management module 140, and the processor 110. The power management module 141 receives an input of the battery 142 and/or an input of the charging management module 140, and supplies power to the processor 110, the internal memory 121, the display 194, the camera 193, the wireless communications module 160, and the like. The power management module 141 may further be configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device may be configured to cover one or more communication bands. Different antennas may further be multiplexed, to improve antenna utilization. For example, the antenna 1 may be multiplexed as a diversity antenna in a wireless local area network. In some other embodiments, the antenna may be used in combination with a tuning switch.

The mobile communications module 150 may provide a solution that is for wireless communication including 2G/3G/4G/5G and the like and that is applied to the electronic device. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor, and is then transferred to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communications module 150 or another function module.

The wireless communications module 160 may provide wireless communication solutions applied to the electronic device, including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC) technology, an infrared (infrared, IR) technology, and the like. The wireless communications module 160 may be one or more devices that integrate at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 of the electronic device is coupled to the mobile communications module 150, and the antenna 2 is coupled to the wireless communications module 160, so that the electronic device may communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or satellite based augmentation systems (satellite based augmentation systems, SBAS).

The electronic device implements the display function through the GPU, the display 194, the application processor, and the like. The GPU is a microprocessor for image processing, and connects the display 194 to the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. A liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a mini-LED, a micro-LED, a micro-OLED, quantum dot light emitting diodes (quantum dot light emitting diodes, QLED), or the like may be used for the display panel. In some embodiments, the electronic device may include one or N displays 194, where N is a positive integer greater than 1.

A series of graphical user interfaces (graphical user interface, GUI) may be displayed on the display 194 of the electronic device, and all these GUIs are of a home screen of the electronic device. Generally, a size of the display 194 of the electronic device is fixed, and limited controls can be displayed only on the display 194 of the electronic device. The control is a GUI element. The control is a software component included in an application, and controls all data processed by the application and an interaction operation related to the data. The user may interact with the control by performing direct manipulation (direct manipulation). In this way, related information about the application is read or edited. Usually, the control may include visual interface elements such as an icon, a key, a menu, a tab, a text box, a dialog box, a status bar, a navigation bar, and a widget. For example, in this embodiment of this application, the display 194 may display a virtual key.

The electronic device may implement the photographing function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated by using the lens, and is projected to a light-sensitive element. The light-sensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as an RGB format or a YUV format. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transform and the like on frequency energy.

The video codec is configured to compress or decompress a digital video. The electronic device may support one or more video codecs. In this way, the electronic device can play or record videos in a plurality of encoding formats, for example, moving picture experts group (moving picture experts group, MPEG) 1, MPEG 2, MPEG 3, MPEG 4, and the like.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device may be implemented through the NPU, for example, image recognition, facial recognition, speech recognition, and text understanding.

The external memory interface 120 may be configured to connect to an external memory card, for example, a micro SD card, to extend a storage capability of the electronic device. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121 to execute various function applications of the electronic device and data processing. For example, in this embodiment, the processor 110 may deploy the AP by executing the instructions stored in the internal memory 121 and by using the solution disclosed in the embodiments of this application. The internal memory 121 may include a program storage area and a data storage area. The program storage area may store an operating system, an application required by at least one function (for example, a voice playing function or an image playing function), and the like. The data storage area may store data (such as audio data and a phone book) created when the electronic device is used, and the like. In addition, the internal memory 121 may include a high-speed random access memory, and may further include a nonvolatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to execute various function applications of the electronic device and data processing.

The electronic device may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may further be configured to code and decode an audio signal. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. The electronic device may listen to music or answer a hands-free call through the speaker 170A.

The receiver 170B, also referred to as an "earpiece", is configured to convert an audio electrical signal into a sound signal. When a call is answered or voice information is received by using the electronic device, the receiver 170B may be put close to a human ear to receive a voice.

The microphone 170C, also referred to as a "mike" or a "mic", is configured to convert a sound signal into an electrical signal. When making a call or sending voice information, the user may make a sound near the microphone 170C through the mouth of the user, to input a sound signal to the microphone 170C. At least one microphone 170C may be disposed in the electronic device. In some other embodiments, two microphones 170C may be disposed in the electronic device, to implement a noise reduction function, in addition to collecting a sound signal. In some other embodiments, three, four, or more microphones 170C may alternatively be disposed in the electronic device, to collect a sound signal and reduce noise. The microphones may further identify a sound source, to implement a directional recording function, and the like.

The headset jack 170D is configured to connect to a wired headset. The headset jack 170D may be the USB interface 130 or a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There is a plurality of types of pressure sensors 180A, for example, a resistive pressure sensor, an inductive pressure sensor, a capacitive pressure sensor. The capacitive pressure sensor may include at least two parallel plates made of conductive materials. When a force is applied to the pressure sensor 180A, capacitance between electrodes changes. The electronic device determines pressure intensity based on a capacitance change. When a touch operation is performed on the display 194, the electronic device detects intensity of the touch operation by using the pressure sensor 180A. The electronic device may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on an SMS message application icon, an instruction for creating a new SMS message is executed.

The gyro sensor 180B may be configured to determine a motion posture of the electronic device. In some embodiments, angular velocities of the electronic device around three axes (namely, axes x, y, and z) may be determined by using the gyro sensor 180B. The gyro sensor 180B may be configured to perform image stabilization during photographing. For example, when the shutter is pressed, the gyro sensor 180B detects an angle at which the electronic device shakes, and calculates, based on the angle, a distance for which a lens module needs to compensate, so that the lens cancels the shake of the electronic device through reverse motion, to implement image stabilization. The gyro sensor 180B may further be used in navigation and motion-sensing game scenarios.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall sensor. The electronic device may detect opening and closing of a flip leather case by using the magnetic sensor 180D. In some embodiments, when the electronic device is a clamshell phone, the electronic device may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E may detect magnitude of accelerations in various directions (usually on three axes) of the electronic device, and may detect magnitude and a direction of the gravity when the electronic device is still. The acceleration sensor 180E may further be configured to identify a posture of the electronic device, and is applied to an application such as switching between a landscape mode and a portrait mode or a pedometer.

The distance sensor 180F is configured to measure a distance. The electronic device may measure the distance in an infrared or a laser manner. In some embodiments, in a photographing scenario, the electronic device may measure a distance by using the distance sensor 180F, to implement quick focusing.

The optical proximity sensor 180G may include a light emitting diode (LED) and an optical detector, for example, a photodiode. The light emitting diode may be an infrared light emitting diode. The electronic device emits infrared light through the light emitting diode. The electronic device detects infrared reflected light from a nearby object by using the photodiode. When sufficient reflected light is detected, it may be determined that there is an object near the electronic device. When insufficient reflected light is detected, the electronic device may determine that there is no object near the electronic device. The electronic device may detect, by using the optical proximity sensor 180G, that the user holds the electronic device close to an ear for a call, to automatically turn off a screen for power saving. The optical proximity sensor 180G may also be used in a smart cover mode or a pocket mode to automatically unlock or lock the screen.

The ambient light sensor 180L is configured to sense ambient light brightness. The electronic device may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device is in a pocket, to avoid an accidental touch.

The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device executes a temperature processing policy by using the temperature detected by the temperature sensor 180J. For example, when the temperature reported by the temperature sensor 180J exceeds a threshold, the electronic device degrades performance of a processor near the temperature sensor 180J, to reduce power consumption and implement thermal protection. In some other embodiments, when the temperature is lower than another threshold, the electronic device heats up the battery 142, to avoid abnormal shutdown of the electronic device due to a low temperature. In some other embodiments, when the temperature is lower than still another threshold, the electronic device boosts an output voltage of the battery 142 to avoid abnormal shutdown due to a low temperature.

The touch sensor 180K is also referred to as a "touch component". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. The display 194 may provide visual output related to the touch operation. In some other embodiments, the touch sensor 180K may alternatively be disposed on a surface of the electronic device at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse to receive a blood pressure beating signal. In some embodiments, the bone conduction sensor 180M may alternatively be disposed in the headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The key 190 includes a power key, a volume key, and the like. The key 190 may be a mechanical key or a touch key. The electronic device may receive a key input, and generate a key signal input related to a user setting and function control of the electronic device.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. The touch vibration feedback effect can also be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted in the SIM card interface 195 or removed from the SIM card interface 195, to implement contact with or separation from the electronic device. The electronic device may support one or N SIM card interfaces, where N is a positive integer greater than 1. The SIM card interface 195 may support a nano-SIM card, a micro-SIM card, a SIM card, and the like. A plurality of cards may be simultaneously inserted in a same SIM card interface 195. The plurality of cards may be of a same type or of different types. The SIM card interface 195 may also be compatible with different types of SIM cards. The SIM card interface 195 may also be compatible with an external storage card. The electronic device interacts with a network by using the SIM card, to implement functions such as calling and data communication. In some embodiments, an eSIM, namely, an embedded SIM card is used for the electronic device. The eSIM card may be embedded in the electronic device, and cannot be separated from the electronic device.

In addition, an operating system runs on the foregoing components, for example, an iOS operating system developed by Apple, an Android open-source operating system developed by Google, and a Windows operating system developed by Microsoft. An application may be installed and run on the operating system.

Further, the electronic device to which the electronic device control method disclosed in this embodiment of this application is applied includes at least two touch areas.

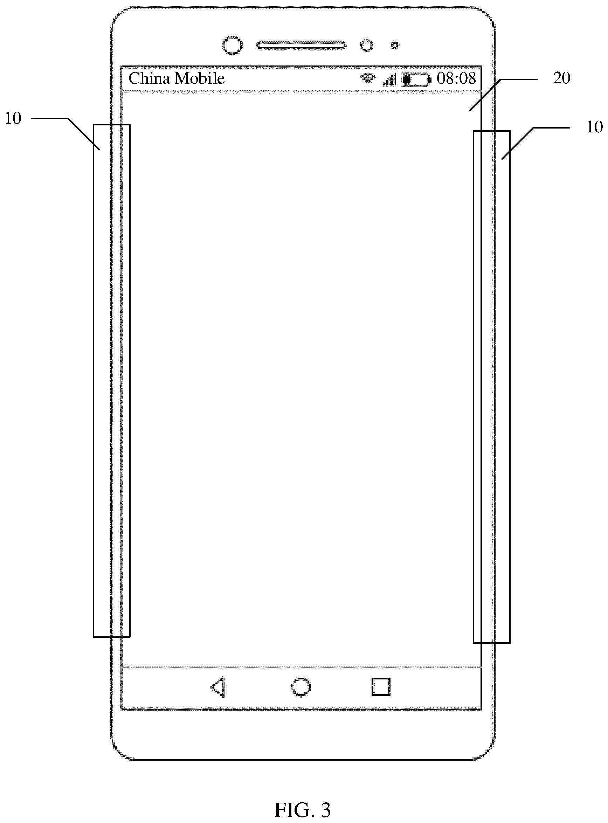

The first touch area is a side touch area of the electronic device, and the second touch area is a front touch area of the electronic device. In this case, referring to a schematic diagram of the electronic device shown in FIG. 3, a first touch area 10 is disposed on a side of the electronic device, and a front touch area 20 is disposed on the front of the electronic device.

In addition, in another example, the first touch area is a rear touch area of the electronic device, and the second touch area is a front touch area of the electronic device.

Alternatively, the electronic device may include at least two screens. For example, a foldable screen is used for the electronic device. In this case, the first touch area is a touch area on a first split screen of the foldable screen of the electronic device, and the second touch area is a touch area on a second split screen of the foldable screen of the electronic device.

Further, a plurality of forms of screens may be used for the electronic device, for example, a flat screen or a curved screen. When the curved screen is used for the electronic device, the first touch area is a side touch area of the electronic device, and the second touch area is a front touch area of the electronic device, the first touch area and the second touch area may be touch areas in different positions on the curved screen.

The following specifically describes the embodiments of this application with reference to the accompanying drawings, to specify the electronic device control method disclosed in this application.

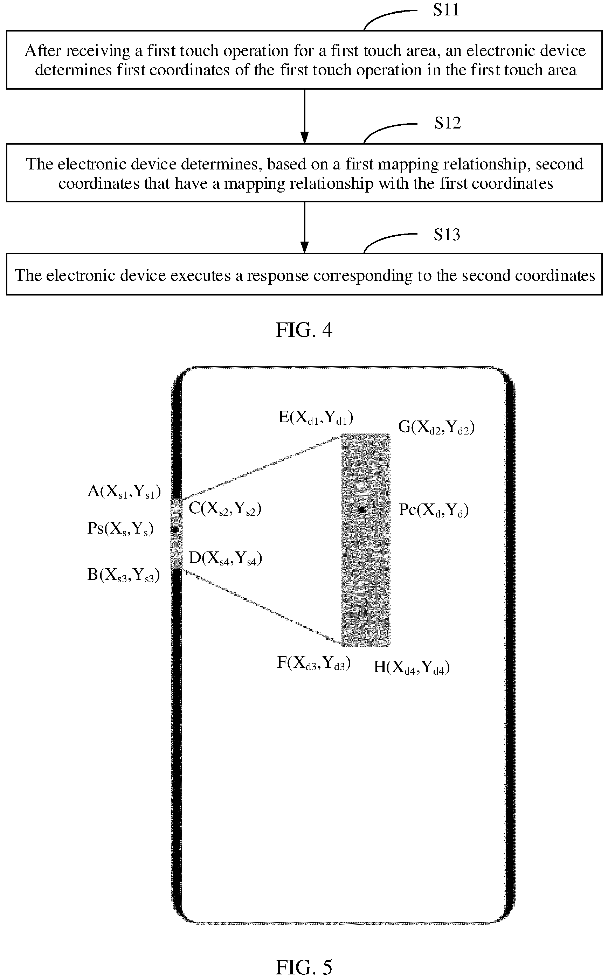

Referring to a schematic diagram of a working procedure shown in FIG. 4, an electronic device control method disclosed in an embodiment of this application includes the following steps.

Step S11: After receiving a first touch operation for a first touch area, an electronic device determines first coordinates of the first touch operation in the first touch area.

In this embodiment of this application, the electronic device is provided with the first touch area, and when a user performs the first touch operation on the first touch area, the electronic device may determine the first coordinates of the first touch operation.

In an example, a capacitive sensor is disposed in the first touch area, and coordinates of a user touch are determined by using the capacitive sensor. In this case, when a finger touches the first touch area, a human body capacitance is superimposed on an original capacitance of the capacitive sensor, causing a capacitance change of the touched capacitive sensor. In this way, the touched capacitive sensor may be determined based on a capacitance change of each capacitive sensor, so as to determine the first coordinates of the first touch operation.

Certainly, the electronic device may alternatively determine the first coordinates of the first touch operation in the first touch area in another manner, for example, based on a change of a force applied to the first touch area or a temperature change of the first touch area. This is not limited in this embodiment of this application.

Step S12: The electronic device determines, based on a first mapping relationship, second coordinates having a mapping relationship with the first coordinates, where the second coordinates are located in a second touch area of the electronic device.

In this embodiment of this application, the first mapping relationship is preset, and the first mapping relationship is used to indicate a mapping relationship between coordinates in the first touch area and coordinates in the second touch area. After the first coordinates are determined, the second coordinates having the mapping relationship with the first coordinates may be determined based on the first mapping relationship.

Step S13: The electronic device executes a response corresponding to the second coordinates.

That the electronic device executes a response corresponding to the second coordinates means that the electronic device executes a function corresponding to the second coordinates. The electronic device executes a corresponding function based on touch coordinates. For example, when the touch coordinates are on a key, a function corresponding to the key is executed. For another example, when the touch coordinates are on an icon, an application corresponding to the icon may be opened.

Alternatively, in some cases, a key combination needs to be used to control the electronic device. In other words, a plurality of keys correspond to one function that needs to be executed by the electronic device. When the electronic device is controlled by using the key combination, that the electronic device executes a response corresponding to the second coordinates means that the electronic device executes a function corresponding to coordinates of another touched key and the second coordinates.

In the electronic device control method disclosed in this embodiment of this application, after receiving the first touch operation for the first touch area, the electronic device determines, based on the first mapping relationship, the second coordinates having the mapping relationship with the first coordinates of the first touch operation. The second coordinates are located in the second touch area. Then, the electronic device determines, based on the second coordinates, the function that needs to be executed.

According to the solution in this embodiment of this application, the coordinates in the first touch area can be mapped to the coordinates in the second touch area. When the first coordinates in the first touch area are touched, the electronic device can map the first coordinates to the second coordinates, to execute the response corresponding to the second coordinates in the second touch area. Therefore, by touching the first touch area, the electronic device can execute a function that needs to be executed when the second touch area is touched. In this way, touching on the second touch area is replaced with touching on the first touch area, to reduce touching on the second touch area, thereby reducing blocking on the second touch area. When an image is displayed in the second touch area, blocking on the image displayed in the second touch area can be correspondingly reduced.

In addition, in the solution in this embodiment of this application, a joypad does not need to be additionally configured for the electronic device. This resolves a conventional-technology problem of high costs and inconvenience of carrying because the joypad needs to be configured.

In an example, the first touch area is a side touch area of the electronic device, the second touch area is a front touch area of the electronic device, and the front touch area is usually a display interface of the electronic device. In this case, according to the solution in this embodiment of this application, the touching on the second touch area can be replaced with the touching on the first touch area, to reduce the touching on the second touch area, thereby reducing blocking on an image displayed on the display interface, and enhancing user experience.

In this embodiment of this application, the second coordinates having the mapping relationship with the first coordinates are determined by using the first mapping relationship. In an example, the first mapping relationship includes an area parameter of a first sub-area and an area parameter of a second sub-area.

The first sub-area is a part of the first touch area, and the second sub-area is a part of the second touch area. The first coordinates are located in the first sub-area, and the second coordinates are located in the second sub-area.

To be specific, in this embodiment of this application, the first touch area may be divided into one or more sub-areas, including the first sub-area, and the second touch area may be divided into one or more sub-areas, including the second sub-area. The first mapping relationship includes the area parameter of the first sub-area and the area parameter of the second sub-area. There is a mapping relationship between each coordinate point in the first sub-area and each coordinate point in the second sub-area. In this embodiment of this application, that there is a mapping relationship between a coordinate point in the first sub-area and a coordinate point in the second sub-area means that, when touching a first coordinate point in the first sub-area, the electronic device determines a second coordinate point that has a mapping relationship with the first coordinate point, and executes a function corresponding to the second coordinate point.

In addition, in this embodiment of this application, there is a plurality of types of area parameters. For example, an area parameter of a sub-area may include a length and a width of the sub-area, and coordinates of a coordinate point in the sub-area, or may include a length of a diagonal.

In an example, both the first sub-area and the second sub-area are rectangles. Referring to a schematic diagram shown in FIG. 5, the first sub-area is a rectangular area formed by using four coordinate points A, B, C, and D as vertices, and the second sub-area is a rectangular area formed by using four coordinate points E, F, G, and H as vertices. Ps(Xs, Ys) located in the first sub-area are the first coordinates.

In this case, the area parameter of the first sub-area includes coordinates of two vertices of a diagonal of the first sub-area, and the area parameter of the second sub-area includes coordinates of two vertices of a diagonal of the second sub-area.

Alternatively, when both the first sub-area and the second sub-area are rectangles, the area parameter of the first sub-area includes a length and a width of the first sub-area and coordinates of one vertex of the first sub-area, and the area parameter of the second sub-area includes a length and a width of the second sub-area and coordinates of one vertex of the second sub-area.

Certainly, the first sub-area and the second sub-area may alternatively be in another shape, and the area parameter may alternatively be in another form, provided that the mapping relationship between the first sub-area and the second sub-area can be determined by using the area parameter. This is not limited in this embodiment of this application.

Further, in this embodiment of this application, the electronic device calculates, based on the first mapping relationship, the second coordinates having the mapping relationship with the first coordinates. When area parameters are different, different first mapping relationships may be used for the electronic device.

In an example, when both the first sub-area and the second sub-area are rectangles, the area parameter of the first sub-area includes the coordinates of the two vertices of the diagonal of the first sub-area, and the area parameter of the second sub-area includes the coordinates of the two vertices of the diagonal of the second sub-area, the first mapping relationship is represented by using the following formulas:

$$X_d = X_{d1} + \frac{|X_{d4} - X_{d1}|}{|X_{s4} - X_{s1}|} * (X_s - X_{s1}) \quad \text{Formula (1)},$$

and

$$Y_d = Y_{d1} + \frac{|Y_{d4} - Y_{d1}|}{|Y_{s4} - Y_{s1}|} * (Y_s - Y_{s1}) \quad \text{Formula (2)}.$$

$(X_d, Y_d)$ are the second coordinates, $(X_s, Y_s)$ are the first coordinates, $(X_1, Y_1)$ and $(X_{d4}, Y_{d4})$ are respectively the coordinates of the two vertices of the diagonal of the second sub-area, and $(X_{s1}, Y_{s1})$ and $(X_{s4}, Y_{s4})$ are respectively the coordinates of the two vertices of the diagonal of the first sub-area.

This example may be applied to a screen of an electronic device shown in FIG. 5. In this case, $(X_s, Y_s)$ are the first coordinates. In other words, coordinates of a touch coordinate point Ps of the first touch operation in the first sub-area are $(X_s, Y_s)$.

In addition, $(X_{d1}, Y_{d1})$ and $(X_{d4}, Y_{d4})$ are the coordinates of the two vertices of the diagonal of the second sub-area. Specifically, $(X_{d1}, Y_{d1})$ and $(X_{d4}, Y_{d4})$ may be respectively coordinates of the vertex E and the vertex H, or may be respectively coordinates of the vertex G and the vertex F. $(X_{s1}, Y_{s1})$ and $(X_{s4}, Y_{s4})$ are respectively the coordinates of the two vertices of the diagonal of the first sub-area. Specifically, $(X_{s1}, Y_{s1})$ and $(X_{s4}, Y_{s4})$ may be respectively coordinates of the vertex A and the vertex D, or may be respectively coordinates of the vertex B and the vertex C. A coordinate point corresponding to the second coordinates may be a point Pc in the second sub-area.

In addition, there is usually a mapping relationship between $(X_{s1}, Y_{s1})$ and $(X_{d1}, Y_{d1})$. That there is a mapping relationship between $(X_{s1}, Y_{s1})$ and $(X_{d1}, Y_{d1})$ means that after $(X_{s1}, Y_{s1})$ in the first touch area are touched, the electronic device determines, based on $(X_{s1}, Y_{s1})$, a function that needs to be executed this time. In this case, when there is a mapping relationship between the vertex A and the vertex E that is in the second sub-area, and $(X_{s1}, Y_{s1})$ are the coordinates of the vertex A in the first sub-area, $(X_{d1}, Y_{d1})$ are the coordinates of the vertex E in the second sub-area.

According to the foregoing two formulas, the electronic device may obtain the second coordinates $(X_d, Y_d)$ of the coordinate point Pc having the mapping relationship with the first coordinates $(X_s, Y_s)$, so that the electronic device determines, based on the second coordinates, the function that needs to be executed this time.

In an example, when both the first sub-area and the second sub-area are rectangles, the area parameter of the first sub-area includes the length and the width of the first sub-area and the coordinates of the one vertex of the first sub-area, and the area parameter of the second sub-area includes the length and the width of the second sub-area and the coordinates of the one vertex of the second sub-area, the first mapping relationship is represented by using the following formulas:

$$X_d = X^1_{d1} + \frac{W^1_1}{W^1_2} * (X_s - X^1_{s1}) \quad \text{Formula (3)},$$

and

$$Y_d = Y^1_{d1} + \frac{L^1_1}{L^1_2} * (Y_s - Y^1_{s1}) \quad \text{Formula (4)}.$$

$(X_d, Y_d)$ are the second coordinates, $(X_s, Y_s)$ are the first coordinates, $W^1_1$, is a length of a side of the second sub-area in an x-axis direction, $W^1_2$ is a length of a side of the first sub-area in the x-axis direction, $L^1_1$ is a length of a side of the second sub-area in a y-axis direction, $L^1_2$ is a length of a side of the first sub-area in the y-axis direction, $(X^1_{d1}, Y^1_{d1})$ are the coordinates of the one vertex of the second sub-area, $(X^1_{s1}, Y^1_{s1})$ are the coordinates of the one vertex of the first sub-area, and there is a mapping relationship between $(X^1_{d1}, Y^1_{d1})$ and $(X^1_{d1}, Y^1_{s1})$.

This example may be applied to the screen of the electronic device shown in FIG. 5. In this case, $(X_s, Y_s)$ are the first coordinates. In other words, the coordinates of the touch coordinate point Ps of the first touch operation in the first sub-area are $(X_s, Y_s)$ .

In addition, $W^1_1$ is the length of the side of the second sub-area in the x-axis direction, that is, $W^1_1$ is a length between the vertex E and the vertex G (or between the vertex F and the vertex H). $W^1_2$ is the length of the side of the first sub-area in the x-axis direction, that is, $W^1_2$ is a length between the vertex A and the vertex C (or between the vertex B and the vertex D).

$L^1_1$ is the length of the side of the second sub-area in the y-axis direction, that is, $L^1_1$ is a length between the vertex E and the vertex F (or between the vertex G and the vertex H). $L^1_2$ is the length of the side of the first sub-area in the y-axis direction, that is, $L^1_2$ is a length between the vertex A and the vertex B (or between the vertex C and the vertex D).

$(X^1_{s1}, Y^1_{d1})$ are the coordinates of the one vertex of the second sub-area, that is, $(X^1_{d1}, Y^1_{d1})$ are the coordinates of the vertex E, the vertex F, the vertex G, or the vertex H of the second sub-area. $(X^1_{s1}, Y^1_{s1})$ are the coordinates of the one vertex of the first sub-area, and there is a mapping relationship between $(X^1_{d1}, Y^1_{d1})$ and $(X^1_{s1}, Y^1_{s1})$. That there is a mapping relationship between $(X^1_{d1}, Y^1_{d1})$ and $(X^1_{s1}, Y^1_{s1})$ means that after $(X^1_{s1}, Y^1_{s1})$ in the first touch area are touched, the electronic device determines, based on $(X^1_{d1}, Y^1_{d1})$ , a function that needs to be executed this time. In this case, when there is a mapping relationship between the vertex A and the vertex E that is in the second sub-area, and $(X^1_{s1}, Y^1_{s1})$ are the coordinates of the vertex A in the first sub-area, $(X^1_{d1}, Y^1_{d1})$ are the coordinates of the vertex E in the second sub-area.

According to the formula (3) and the formula (4), the electronic device may obtain the second coordinates $(X_d, Y_d)$ of the coordinate point Pc having the mapping relationship with the first coordinates $(X_s, Y_s)$, so that the electronic device determines, based on the second coordinates, the function that needs to be executed this time.

In addition, in some cases, the first sub-area is a rectangle, and the second sub-area may alternatively be a line segment in an x-axis direction. In other words, a length of the second sub-area in a vertical direction is 0. When the first sub-area is a rectangle and the second sub-area is a line segment in the x-axis direction, the area parameter of the first sub-area includes a length and a width of the first sub-area and coordinates of one vertex of the first sub-area, and the area parameter of the second sub-area includes a length of the horizontal line, the first mapping relationship is represented by using the following formulas:

$$X_d = X^2_{d1} + \frac{W^2_1}{W^2_2} * (X_s - X^2_{s1}) \quad \text{Formula (5)},$$

and

$$Y_d = Y^2_{d1} \quad \text{Formula (6)}.$$

$(X_d, Y_d)$ are the second coordinates, $(X_s, Y_s)$ are the first coordinates, $W^2_1$ is the length of the line segment, $W^2_2$ is a length of a side of the first sub-area in the x-axis direction, $(X^2_{d1}, Y^2_{d1})$ are coordinates of one vertex of the second sub-area, $(X^2_{s1}, Y^2_{s1})$ are the coordinates of the one vertex of the first sub-area, and there is a mapping relationship between $(X^2_{d1}, Y^2_{d1})$ and $(X^2_{s1}, Y^2_{s1})$.

In addition, in some cases, the first sub-area is a rectangle, and the second sub-area may alternatively be a line segment in a y-axis direction. In other words, a length of the second sub-area in a horizontal direction is 0. When the first sub-area is a rectangle and the second sub-area is a line segment in the y-axis direction, the area parameter of the first sub-area includes a length and a width of the first sub-area and coordinates of one vertex of the first sub-area, and the area parameter of the second sub-area includes a length of the vertical line, the first mapping relationship is represented by using the following formulas:

$$X_d = X^3_{d1} \quad \text{Formula (7)},$$

and

$$Y_d = Y^3{}_{d1} + \frac{L^3{}_1}{L^3{}_2} * (Y_s - Y^3{}_{s1}) \quad \text{Formula (8).}$$

$(X_d, Y_d)$ are the second coordinates, $(X_s, Y_s)$ are the first coordinates, $L^3{}_1$ is the length of the line segment, $L^3{}_2$ is a length of a side of the first sub-area in the y-axis direction, $(X^3{}_{d1}, Y^3{}_{d1})$ are coordinates of one vertex of the second sub-area, $(X^3{}_{s1}, Y^3{}_{s1})$ are the coordinates of the one vertex of the first sub-area, and there is a mapping relationship between $(X^3{}_{d1}, Y^3{}_{d1})$ and $(X^3{}_{s1}, Y^3{}_{s1})$.

In addition, in some cases, the second sub-area is a coordinate point, that is, in the graph shown in FIG. 5, all four points E, F, G, and H are a same point. When the first sub-area is a rectangle and the second sub-area is a coordinate point, and the area parameter of the second sub-area includes coordinates of the coordinate point, the first mapping relationship is represented by using the following formulas:

$$X_d = X^4{}_{d1} \quad \text{Formula (9),}$$

and

$$Y_d = Y^4{}_{d1} \quad \text{Formula (10).}$$

$(X_d, Y_d)$ are the second coordinates, and $(X^4{}_{d1}, Y^4{}_{d1})$ are the coordinates of the coordinate point.

Certainly, the first mapping relationship may alternatively be represented in another form. This is not limited in this embodiment of this application.

In the foregoing embodiment, the function that needs to be executed this time is determined by the electronic device based on the second coordinates. In a feasible example, the electronic device may determine the function corresponding to the second coordinates, namely, the function that needs to be executed this time.

In addition, in some application scenarios, a key combination of the electronic device needs to be touched. In other words, locations at which a plurality of coordinates are located on the electronic device need to be simultaneously touched. In this case, this application further discloses another embodiment.

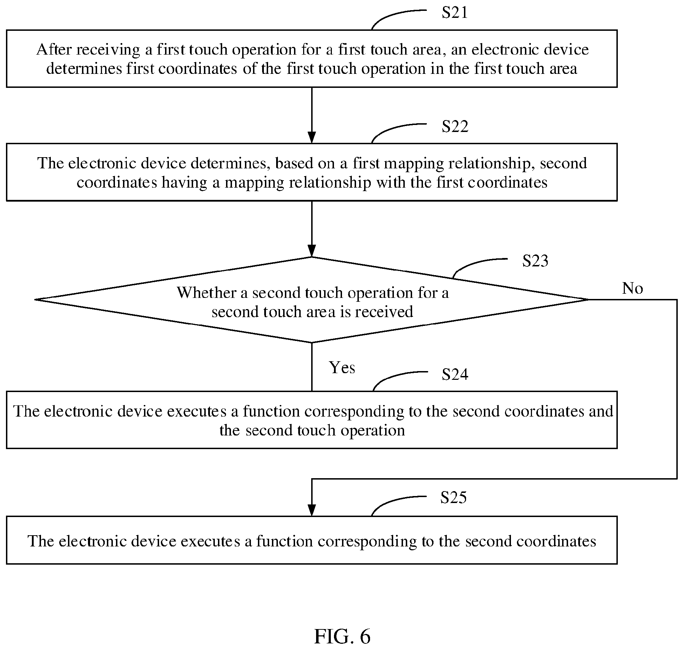

Referring to a schematic diagram of a working procedure shown in FIG. 6, the electronic device control method disclosed in the embodiments of this application includes the following steps.

Step S21: After receiving a first touch operation for a first touch area, an electronic device determines first coordinates of the first touch operation in the first touch area.

Step S22: The electronic device determines, based on a first mapping relationship, second coordinates having a mapping relationship with the first coordinates, where the second coordinates are located in a second touch area of the electronic device.

A specific operation process of step S21 and step S22 is the same as a specific operation process of step S11 and step S12, and reference may be made to each other. Details are not described herein again.

Step S23: The electronic device determines whether a second touch operation for the second touch area is received within a first time period after the first touch operation is received.

If yes, an operation in step S24 is performed; or if no, an operation in step S25 is performed.

Step S24: When determining that the second touch operation is received, the electronic device executes a function corresponding to the second coordinates and the second touch operation.

When the electronic device determines that the second touch operation for the second touch area is received within the first time period after the first touch operation is received, it indicates that the electronic device receives the first touch operation and the second touch operation within a relatively short time interval, and the first touch operation and the second touch operation are touching on a key combination of the electronic device. In this case, the electronic device needs to jointly determine, based on the second coordinates and the coordinates of the second touch operation, a function that needs to be executed this time.

Step S25: When the electronic device determines that the second touch operation for the second touch area is not received within a preset time period after the first touch operation is received, the electronic device executes a function corresponding to the second coordinates.

In the conventional technology, when the key combination needs to be touched, a user needs to simultaneously touch a plurality of coordinate points in the second touch area, so that an interface on which the second touch area is located is severely blocked.

However, according to the solution in this embodiment of this application, when the key combination needs to be touched, some touch operations that need to be performed on the second touch area are switched to the first touch area, and the first touch area and the second touch area of the electronic device jointly receive the touch operations. In this case, if the second touch operation for the second touch area is received within the preset time period after the first touch operation is received, the function that needs to be executed this time is determined based on the second coordinates and the coordinates of the second touch operation. The second coordinates and the coordinates of the second touch operation are coordinates indicated by the key combination. Therefore, according to the solution in this embodiment of this application, a touch operation on the second touch area can be reduced, thereby reducing blocking of the interface on which the second touch area is located.

In an example, four keys are combined. When the electronic device is controlled by using the conventional technology, four fingers are usually required to simultaneously operate the second touch area of the electronic device. A schematic diagram of the operation may be shown in FIG. 1. In this case, the four fingers block most content displayed on the interface in which the second touch area is located.

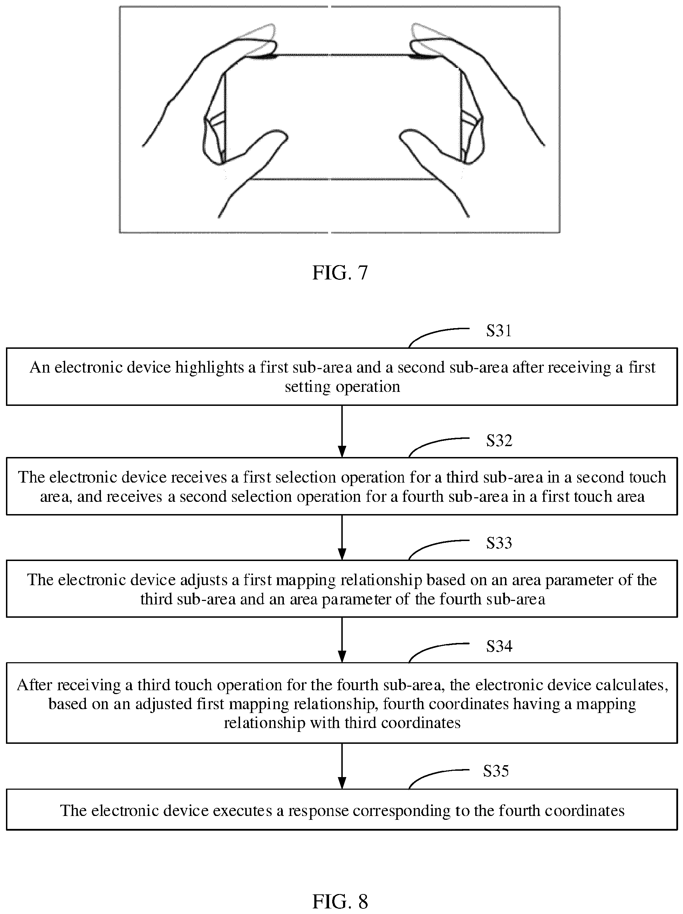

However, when the electronic device is controlled by using the solution in this embodiment of this application, referring to a schematic diagram of the operation shown in FIG. 7, the first touch area may be touched by using two fingers, and the second touch area may be touched by using the other two fingers, to reduce blocking of an image displayed on a display.

In addition, in the foregoing embodiment, after receiving the first touch operation, the electronic device determines whether the second touch operation for the second touch area is received within the preset time period. In an actual operation process, alternatively, after receiving a touch operation for the second touch area, the electronic device may determine whether a touch operation for the first touch area is received within the preset time period. If yes, the electronic device jointly determines, based on coordinates in the second touch area to which touch coordinates in the first touch area are mapped and touch coordinates in the second touch area, the function that needs to be executed this time.

Further, in this embodiment of this application, the second coordinates having the mapping relationship with the first coordinates in the first sub-area are determined based on the first mapping relationship, and the second coordinates are located in the second sub-area. However, different users have different use habits. Correspondingly, when a side area is touched, areas that different users are accustomed to touching may also be different. For example, some users are accustomed to touching a first touch sub-area, and some users may be used to touching a second touch sub-area, where the first touch sub-area and the second touch sub-area are different areas in the first touch area.

To meet an actual requirement of the user, in this embodiment of this application, adjustment of the first mapping relationship is further supported. In this case, referring to a schematic diagram of a working procedure shown in FIG. 8, this embodiment of this application further discloses the following steps.

Step S31: The electronic device highlights the first sub-area and the second sub-area after receiving a first setting operation.

The first sub-area and the second sub-area are two sub-areas that have a mapping relationship and that are indicated by the first mapping relationship before adjustment. By highlighting the first sub-area and the second sub-area, the user may determine whether the first mapping relationship needs to be adjusted.

In addition, the first sub-area and the second sub-area may be highlighted in a manner such as highlighting, preset color display, or the like.

Step S32: The electronic device receives a first selection operation for a third sub-area in the second touch area, and receives a second selection operation for a fourth sub-area in the first touch area.

When the user expects to map the fourth sub-area and the third sub-area, the user may separately perform the first selection operation on the third sub-area and the second selection operation on the fourth sub-area.

The first selection operation and the second selection operation may be implemented in a plurality of manners. In one of the manners, the first selection operation is a touch operation performed by the user on the third sub-area, and the second selection operation is a touch operation performed by the user on the fourth sub-area.

In another manner, the user may tap the fourth sub-area, and after dragging the fourth sub-area to the third sub-area, lifts a finger used to tap the fourth sub-area. In this case, the second selection operation is a touch operation and a subsequent drag operation performed on the fourth sub-area, and the first selection operation is a finger lifting operation performed after the fourth sub-area is dragged to the third sub-area.

Certainly, the first selection operation and the second selection operation may alternatively be performed in another manner. This is not limited in this embodiment of this application.

Step S33: The electronic device adjusts the first mapping relationship based on an area parameter of the third sub-area and an area parameter of the fourth sub-area.

In this case, an adjusted first mapping relationship includes the area parameter of the fourth sub-area and the area parameter of the third sub-area. In addition, the adjusted first mapping relationship is used to calculate, based on coordinates in the fourth sub-area, coordinates in the third sub-area that have a mapping relationship with the coordinates.

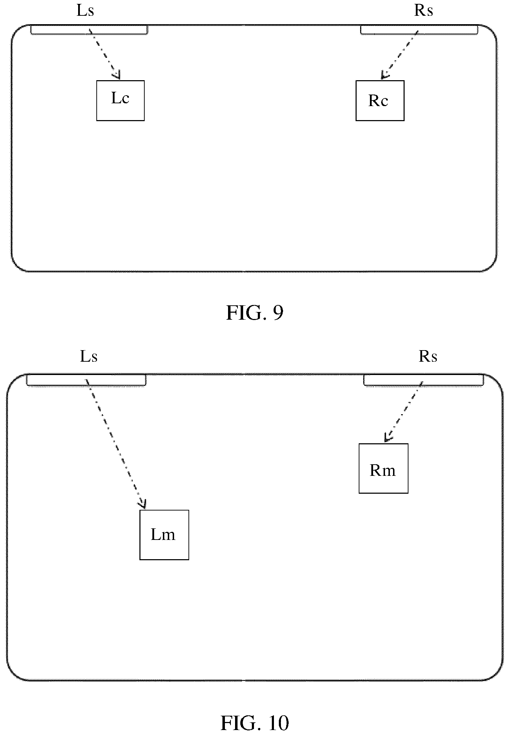

The first mapping relationship may be adjusted by performing operations in step S31 to step S33. Referring to a schematic diagram shown in FIG. 9, the first mapping relationship before adjustment is separately used to indicate a mapping relationship between a first sub-area Ls and a second sub-area Lc, and a mapping relationship between a first sub-area Rs and a second sub-area Rc. After the first mapping relationship is adjusted based on the first selection operation and the second selection operation, referring to a schematic diagram shown in FIG. 10, the adjusted first mapping relationship is separately used to indicate a mapping relationship between a fourth sub-area Ls and a third sub-area Lm, and a mapping relationship between a first sub-area Rs and a second sub-area Rm.

Step S34: After receiving a third touch operation for the fourth sub-area, the electronic device calculates, based on the adjusted first mapping relationship, fourth coordinates having a mapping relationship with third coordinates, where the third coordinates are coordinates of the third touch operation in the fourth sub-area, and the fourth coordinates are located in the third sub-area of the electronic device.

Step S35: The electronic device executes a response corresponding to the fourth coordinates.

According to operations in step S34 and step S35, after adjusting the first mapping relationship, the electronic device may perform mapping calculation on the third coordinates in the fourth sub-area based on the adjusted first mapping relationship, to obtain the fourth coordinates in the second touch area that have the mapping relationship with the third coordinates.

In addition, for execution of the response corresponding to the fourth coordinates by the electronic device, refer to the foregoing embodiment. Details are not described herein again.

In this embodiment of this application, the first mapping relationship is determined based on the area parameter, and the electronic device can determine the area parameter. Therefore, according to the solution in this embodiment of this application, the first mapping relationship can be adjusted, to meet diversified requirements of the user.

In an example, referring to FIG. 9, both the first sub-area Ls and the second sub-area Lc are rectangles, the area parameter of the first sub-area includes coordinates of two vertices of a diagonal of the first sub-area, and the area parameter of the second sub-area includes coordinates of two vertices of a diagonal of the second sub-area. After the first mapping relationship is adjusted, referring to FIG. 10, both the fourth sub-area Ls and the second sub-area Lm are rectangles. In this case, the electronic device may determine coordinates of two vertices of a diagonal of the fourth sub-area Ls and coordinates of two vertices of a diagonal of the second sub-area Lm, and determine the adjusted first mapping relationship based on the coordinates.

Further, in this embodiment of this application, before the electronic device determines, based on the first mapping relationship, the second coordinates having the mapping relationship with the first coordinates, the method further includes:

The electronic device determines a current application mode; and

when the current application mode is a first mode, the electronic device determines, based on the first mapping relationship, the second coordinates having the mapping relationship with the first coordinates.

The electronic device can work in a plurality of different application modes. In this embodiment of this application, the first mode is preset, and when the application mode of the electronic device is the first mode, mapping calculation is performed on the first coordinates based on the first mapping relationship. In this way, mapping calculation on the first coordinates of the first touch area can be implemented each time the electronic device enters the first mode.

The first mode may be a plurality of types of application modes. In an example, when the electronic device is in a landscape mode, the electronic device determines that the current application mode is the first mode.

Generally, when the user pays more attention to an image displayed on the display of the electronic device, the electronic device is adjusted to the landscape mode. For example, when the user watches a video by using the electronic device, or plays a game by using the electronic device, a display image in the landscape mode more conforms to a viewing habit of the user. Therefore, the electronic device is usually adjusted to the landscape mode. In this case, in this embodiment of this application, it may be set that the electronic device is in the first mode when the electronic device is in the landscape mode.

In another example, when the electronic device runs a preset application, the electronic device determines that the current application mode is the first mode.

The preset application may be a game application, an instant messaging application, or the like. In this case, when the electronic device runs the application, it is determined that the electronic device is in the first mode.

In an example, the user pays more attention to a game image when the user plays a game, and the second touch area is a display interface of the electronic device. In this case, it may be set that when the electronic device runs a game-type application, the electronic device is in the first mode. In this case, according to the solution in this embodiment of this application, the user may touch the first touch area, to reduce touching on the second touch area, thereby reducing blocking on the game image and enhancing game experience.

Certainly, another application mode may alternatively be set to the first mode. This is not limited in this embodiment of this application.

In this embodiment of this application, when it is determined that the application mode of the electronic device is the first mode, the electronic device maps the first coordinates to obtain the second coordinates having the mapping relationship with the first coordinates. The first mode may be set based on a requirement of the user, to meet the diversified requirements of the user.

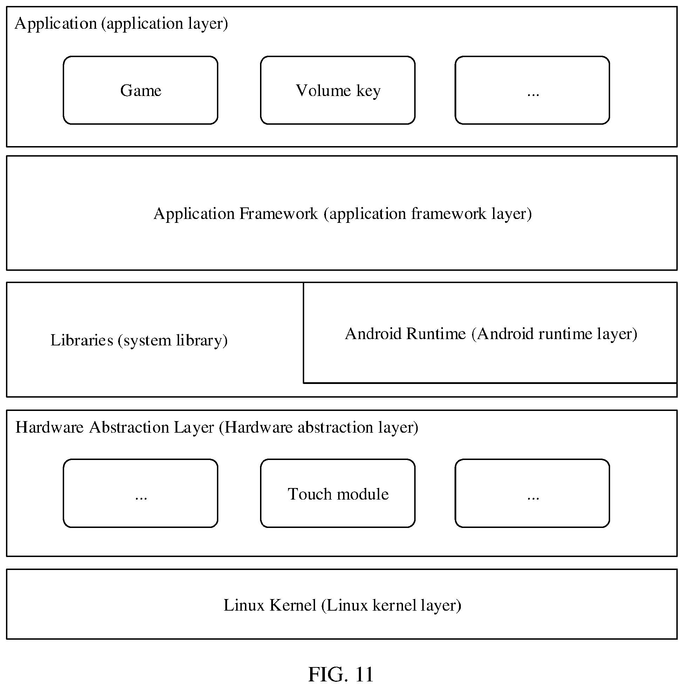

To clarify the electronic device control method disclosed in the embodiments of this application, the following further discloses an example of software structure layers of the electronic device. In this example, an Android system is used. Referring to a schematic diagram of the software structure layers shown in FIG. 11, in this embodiment of this application, the software structure layers of the electronic device include: a Linux kernel layer (namely, Linux Kernel), a hardware abstraction layer (namely, Hardware Abstraction Layer), a system library (namely, Libraries), an application framework layer (namely, Application Framework), and an application layer (namely, Application). The system library includes an Android runtime layer (namely, Android Runtime). The Linux kernel layer may be connected to an integrated circuit of a touch panel. The hardware abstraction layer includes a touch module. After a touch area on the electronic device receives a touch operation, the touch module may determine touch coordinates.

In some embodiments of this application, the application framework layer determines whether the current application mode is the first mode. If the current application mode is the first mode, the application framework layer generates a corresponding mapping instruction, and transmits the mapping instruction to the touch module at the hardware abstraction layer. After receiving the mapping instruction, the touch module of the hardware abstraction layer maps the first coordinates to the second coordinates based on the first mapping relationship, where the second coordinates are located in the second touch area. Then, the touch module transmits the second coordinates to the application layer, so that the application layer determines, based on the second coordinates, the function that needs to be executed this time. For example, when the function corresponding to the second coordinates is to perform an operation on the game, the application layer controls the game application to perform a corresponding operation. Alternatively, when the function corresponding to the second coordinates is to adjust volume, the application layer adjusts the volume.

To clarify the solution disclosed in the embodiments of this application, the following discloses a specific example. In the conventional technology, a physical volume adjustment key is usually disposed on a side of an electronic device. Currently, a screen-to-body ratio of an electronic device is increasingly large, and a curved screen is more widely applied. Consequently, a side area becomes smaller. In this case, in the example disclosed in this embodiment of this application, a physical volume key is not disposed on a side of the electronic device. Instead, a volume adjustment key disposed in the second touch area is used to adjust volume. In other words, the volume adjustment key in the second touch area is used to replace the physical volume key on the side. The volume adjustment key in the second touch area is usually a virtual key. In this case, the volume adjustment key may be a line segment in the second touch area in the y-axis direction, and the line segment may include two coordinates that respectively correspond to two functions: "volume up" and "volume down".

To prevent a finger from blocking the game image when the user adjusts the volume, the user may touch the first touch area. When the electronic device receives a touch operation performed by the user on the first coordinates in the first touch area, and the first mapping relationship indicates that there is a mapping relationship between the first coordinates in the first touch area and the coordinates corresponding to "volume up", the electronic device performs an operation of increasing the volume. In addition, when the electronic device receives a touch operation performed by the user on the first coordinates in the first touch area, and the first mapping relationship indicates that there is a mapping relationship between the first coordinates in the first touch area and the coordinates corresponding to "volume down", the electronic device performs an operation of decreasing the volume.

In this example, the user does not need to touch the second touch area, but touches the first touch area to implement volume adjustment. In this way, the finger does not block the image displayed on the display interface.

Certainly, in an actual application process, functions of a coordinate point in the first touch area and another key in the second touch area may further be established, so that the electronic device can perform more types of functions after receiving the touch operation for the first touch area. This is not limited in this embodiment of this application.

Apparatus embodiments of the present invention are provided in the following, and may be used to execute the method embodiments of the present invention. For details that are not disclosed in the apparatus embodiments of the present invention, refer to the method embodiments of the present invention.

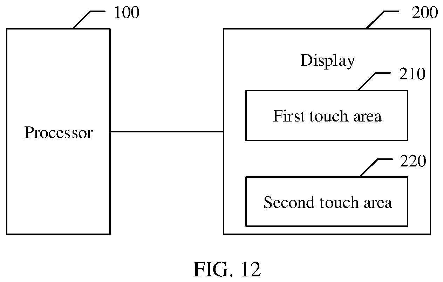

An embodiment of this application discloses an electronic device. Referring to a schematic structural diagram shown in FIG. 12, the electronic device includes:
a processor 100 and a display 200 that has a touch function.

The display 200 includes a first touch area 210 and a second touch area 220.

The processor is configured to: after the electronic device receives a first touch operation for the first touch area, determine first coordinates of the first touch operation in the first touch area; determine, based on a first mapping relationship, second coordinates having a mapping relationship with the first coordinates, where the second coordinates are located in the second touch area of the electronic device; and then execute a response corresponding to the second coordinates.

According to the solution in the embodiments of this application, coordinates in the first touch area can be mapped to coordinates in the second touch area. When the first coordinates in the first touch area are touched, the electronic device can map the first coordinates to the second coordinates, to execute the response corresponding to the second coordinates in the second touch area. Therefore, by touching the first touch area, the electronic device can execute a function that needs to be executed when the second touch area is touched. In this way, touching on the second touch area is replaced with touching on the first touch area, to reduce touching on the second touch area, thereby reducing blocking on the second touch area. When an image is displayed in the second touch area, blocking on the image displayed in the second touch area can be correspondingly reduced.

In addition, in the solution in the embodiments of this application, a joypad does not need to be additionally configured for the electronic device. This resolves a conventional-technology problem of high costs and inconvenience of carrying because the joypad needs to be configured.

Further, in the electronic device disclosed in this application, the first mapping relationship includes an area parameter of a first sub-area and an area parameter of a second sub-area.

The first sub-area is a part of the first touch area, and the second sub-area is a part of the second touch area.

The first coordinates are located in the first sub-area, and the second coordinates are located in the second sub-area.

The first sub-area is a part of the first touch area, and the second sub-area is a part of the second touch area. The first coordinates are located in the first sub-area, and the second coordinates are located in the second sub-area.

To be specific, in this embodiment of this application, the first touch area may be divided into one or more sub-areas, including the first sub-area, and the second touch area may be divided into one or more sub-areas, including the second sub-area. The first mapping relationship includes the area parameter of the first sub-area and the area parameter of the second sub-area. There is a mapping relationship between each coordinate point in the first sub-area and each coordinate point in the second sub-area. In this embodiment of this application, that there is a mapping relationship between a coordinate point in the first sub-area and a coordinate point in the second sub-area means that when touching a first coordinate point in the first sub-area, the electronic device determines a second coordinate point that has a mapping relationship with the first coordinate point, and executes a function corresponding to the second coordinate point.

Further, in the electronic device disclosed in this application, when both the first sub-area and the second sub-area are rectangles, the area parameter of the first sub-area includes coordinates of two vertices of a diagonal of the first sub-area, and the area parameter of the second sub-area includes coordinates of two vertices of a diagonal of the second sub-area, the first mapping relationship is represented by using the following formulas:

$$X_d = X_{d1} + \frac{|X_{d4} - X_{d1}|}{|X_{s4} - X_{s1}|} * (X_s - X_{s1}),$$

and

$$Y_d = Y_{d1} + \frac{|Y_{d4} - Y_{d1}|}{|Y_{s4} - Y_{s1}|} * (Y_s - Y_{s1}),$$

where

$(X_d, Y_d)$ are the second coordinates, $(X_s, Y_s)$ are the first coordinates, $(X_{d1}, Y_{d1})$ and $(X_{d4}, Y_{d4})$ are respectively the coordinates of the two vertices of the diagonal of the second sub-area, and $(X_{s1}, Y_{s1})$ and $(X_{s4}, Y_{s4})$ are respectively the coordinates of the two vertices of the diagonal of the first sub-area. In addition, there is usually a mapping relationship between $(X_{s1}, Y_{s1})$ and $(X_{d1}, Y_{d1})$.

Further, in the electronic device disclosed in this application, when both the first sub-area and the second sub-area are rectangles, the area parameter of the first sub-area includes a length and a width of the first sub-area and coordinates of one vertex of the first sub-area, and the area parameter of the second sub-area includes a length and a width of the second sub-area and coordinates of one vertex of the second sub-area, the first mapping relationship is represented by using the following formulas:

$$X_d = X^1_{d1} + \frac{W^1_1}{W^1_2} * (X_s - X^1_{s1}),$$

and

$$Y_d = Y^1_{d1} + \frac{L^1_1}{L^1_2} * (Y_s - Y^1_{s1}),$$

where

$(X_d, Y_d)$ are the second coordinates, $(X_s, Y_s)$ are the first coordinates, $W^1_1$ is a length of a side of the second sub-area in an x-axis direction, $W^1_2$ is a length of a side of the first sub-area in the x-axis direction, $L^1_1$ is a length of a side of the second sub-area in a y-axis direction, $L^1_2$ is a length of a side of the first sub-area in the y-axis direction, $(X^1_{d1}, Y^1_{d1})$ are the coordinates of the one vertex of the second sub-area, $(X^1_{s1}, Y^1_{s1})$ are the coordinates of the one vertex of the first sub-area, and there is a mapping relationship between $(X^1_{d1}, Y^1_{d1})$ and $(X^1_{s1}, Y^1_{s1})$.

Further, in the electronic device disclosed in this application, when the first sub-area is a rectangle and the second sub-area is a line segment in an x-axis direction, the area parameter of the first sub-area includes a length and a width of the first sub-area and coordinates of one vertex of the first sub-area, and the area parameter of the second sub-area includes a length of the horizontal line, the first mapping relationship is represented by using the following formulas:

$$X_d = X^2_{d1} + \frac{W^2_1}{W^2_2} * (X_s - X^2_{s1}),$$

and

$$Y_d = Y^2_{d1},$$

where

$(X_d, Y_d)$ are the second coordinates, $(X_s, Y_s)$ are the first coordinates, $W^2_1$ is the length of the line segment, $W^2_2$ is a length of a side of the first sub-area in the x-axis direction, $(X^2_{d1}, Y^2_{d1})$ are coordinates of one vertex of the second sub-area, $(X^2_{s1}, Y^2_{s1})$ are the coordinates of the one vertex of the first sub-area, and there is a mapping relationship between $(X^2_{d1}, Y^2_{d1})$ and $(X^2_{s1}, Y^2_{s1})$.

Alternatively, when the first sub-area is a rectangle and the second sub-area is a line segment in a y-axis direction, the area parameter of the first sub-area includes a length and a width of the first sub-area and coordinates of one vertex of the first sub-area, and the area parameter of the second sub-area includes a length of the vertical line, the first mapping relationship is represented by using the following formulas:

$$X_d = X^3_{d1},$$

and

$$Y_d = Y^3_{d1} + \frac{L^3_1}{L^3_2} * (Y_s - Y^3_{s1}),$$

where

$(X_d, Y_d)$ are the second coordinates, $(X_s, Y_s)$ are the first coordinates, $L^3_1$ is the length of the line segment, $L^3_2$ is a length of a side of the first sub-area in the y-axis direction, $(X^3_{d1}, Y^3_{d1})$ are coordinates of one vertex of the second sub-area, $(X^3_{s1}, Y^3_{s1})$ are the coordinates of the one vertex of the first sub-area, and there is a mapping relationship between $(X^3_{d1}, Y^3_{d1})$ and $(X^3_{s1}, Y^3_{s1})$.

Further, in the electronic device disclosed in this application, when the first sub-area is a rectangle and the second sub-area is a coordinate point, and the area parameter of the second sub-area includes coordinates of the coordinate point, the first mapping relationship is represented by using the following formulas:

$$X_d = X^4_{d1}$$

, and

$$Y_d = Y^4_{d1},$$

where

$(X_d, Y_d)$ are the second coordinates, and $(X^4_{d1}, Y^4_{d1})$ are the coordinates of the coordinate point.

Further, in the electronic device disclosed in this application, executing the response corresponding to the second coordinates includes:

The processor determines whether a second touch operation for the second touch area is received within a first time period after the first touch operation is received; and

when determining that the second touch operation is received, the processor executes a function corresponding to the second coordinates and the second touch operation.

Further, in the electronic device disclosed in this application,

after the electronic device receives a first setting operation, the processor triggers the display to highlight the first sub-area and the second sub-area;

the processor is further configured to: after the electronic device receives a first selection operation for a third sub-area in the second touch area, and receives a second selection operation for a fourth sub-area in the first touch area, adjust the first mapping relationship based on an area parameter of the third sub-area and an area parameter of the fourth sub-area;

after the electronic device receives a third touch operation for the fourth sub-area, the processor is further configured to calculate, based on an adjusted first mapping relationship, fourth coordinates having a mapping relationship with third coordinates, where the third coordinates are coordinates of the third touch operation in the fourth sub-area, and the fourth coordinates are located in the third sub-area of the electronic device; and

the processor executes a response corresponding to the fourth coordinates.

Further, in the electronic device disclosed in this application, before determining, based on the first mapping relationship, the second coordinates having the mapping relationship with the first coordinates, the processor is further configured to determine a current application mode. When the current application mode is a first mode, the processor determines, based on the first mapping relationship, the second coordinates having the mapping relationship with the first coordinates.

Further, in the electronic device disclosed in this application, when the processor is in a landscape mode, the electronic device determines that the current application mode is the first mode.

Alternatively, when the electronic device runs a preset application, the processor determines that the current application mode is the first mode.

Further, in the electronic device disclosed in this application, the first touch area is a side touch area of the electronic device.

The second touch area is a front touch area of the electronic device.

In a specific implementation, an embodiment of this application further provides a computer-readable storage medium. The computer-readable storage medium includes instructions. When a computer-readable medium disposed in any device runs on a computer, all or some of the steps in the embodiments corresponding to FIG. 4, FIG. 6, and FIG. 8 may be implemented. A storage medium of the computer-readable medium may be a magnetic disk, an optical disc, a read-only memory (English: read-only memory, ROM for short), or a random access memory (English: random access memory, RAM for short), or the like.

In addition, another embodiment of this application further discloses a computer program product including instructions. When the computer program product runs on an electronic device, the electronic device is enabled to perform all or some of the steps in the embodiments corresponding to FIG. 4, FIG. 6, and FIG. 8.

The various illustrative logical units and circuits described in the embodiments of the present invention may implement or operate the described functions by using a general-purpose processor, a digital information processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital information processor and a microprocessor, a plurality of microprocessors, one or more microprocessors in combination with a digital information processor core, or any other similar configuration.

The steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to the processor, so that the processor may read information from the storage medium and write information to the storage medium. Alternatively, the storage medium may alternatively be integrated into a processor. The processor and the storage medium may be arranged in an ASIC, and the ASIC may be arranged in UE. Optionally, the processor and the storage medium may be arranged in different components of the UE.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

All or some of the foregoing embodiments may be implemented by using software, hardware, firmware, or any combination thereof. When being implemented by using the software, all or some of the embodiments may be implemented in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

All parts in this specification are described in a progressive manner. For same or similar parts in the embodiments, mutual reference may be made, and each embodiment focuses on a difference from another embodiment. Especially, apparatus and system embodiments are basically similar to a method embodiment, and therefore are described briefly; for related parts, refer to partial descriptions in the method embodiment.

A person skilled in the art may clearly understand that, the technologies in the embodiments of the present invention may be implemented by software in addition to a necessary general hardware platform. Based on such an understanding, the technical solutions in the embodiments of the present invention essentially, or the part contributing to the conventional technology may be implemented in the form of a software product. The computer software product may be stored in a storage medium, such as a ROM/RAM, a magnetic disk, or an optical disc, and includes several instructions for indicating a computer device (which may be a personal computer, a server, or a network device) to perform the methods described in the embodiments or some parts of the embodiments of the present invention.

For same or similar parts in the embodiments in this specification, refer to each other. Especially, the apparatus embodiment is basically similar to the method embodiment, and therefore is described briefly. For related parts, refer to the descriptions in the method embodiment.

The foregoing descriptions are implementations of the present invention, but are not intended to limit the protection scope of the present invention.

**Claims**

1. An electronic device control method, comprising:

after receiving a first touch operation for a first touch area, determining (S11, S21), by an electronic device comprising a display, first coordinates of the first touch operation in the first touch area;
determining (S12, S22), by the electronic device based on a first mapping relationship, second coordinates having a mapping relationship with the first coordinates, wherein the second coordinates are located in a second touch area of the electronic device, wherein the display comprises the first touch area and the second touch area; and
executing (S13, S25), by the electronic device, a response corresponding to the second coordinates;
wherein the executing (S13, S25), by the electronic device, a response corresponding to the second coordinates comprises:

determining (S23), by the electronic device, whether a second touch operation for the second touch area is received within a first time period after the first touch operation is received; and
when determining that the second touch operation is received, executing (S24), by the electronic device, a function corresponding to the second coordinates and the second touch operation, wherein the electronic device jointly determines the function based on the second coordinates and coordinates of the second touch operation, wherein the second coordinates and the coordinates of the second touch operation are coordinates indicated by a key combination, which are locations at which a plurality of coordinates are located on the electronic device and that need to be simultaneously touched;
wherein before the determining (S12, S22), by the electronic device based on a first mapping relationship, second coordinates having a mapping relationship with the first coordinates, the method further comprises:

determining, by the electronic device, a current application mode; and

when the current application mode is a first mode, determining, by the electronic device based on the first mapping relationship, the second coordinates having the mapping relationship with the first coordinates, wherein the first touch area is a side touch area of the electronic device and disposed on a side of the electronic device, and the second touch area is a front touch area of the electronic device and disposed on the front of the electronic device.

2. The method according to claim 1, wherein

the first mapping relationship comprises an area parameter of a first sub-area and an area parameter of a second sub-area;

the first sub-area is a part of the first touch area, and the second sub-area is a part of the second touch area; and

the first coordinates are located in the first sub-area, and the second coordinates are located in the second sub-area.

3. The method according to claim 2, wherein when both the first sub-area and the second sub-area are rectangles, the area parameter of the first sub-area comprises coordinates of two vertices of a diagonal of the first sub-area, and the area parameter of the second sub-area comprises coordinates of two vertices of a diagonal of the second sub-area, the first mapping relationship is represented by using the following formulas:

$$X_d = X_{d1} + \frac{|X_{d4} - X_{d1}|}{|X_{s4} - X_{s1}|} * (X_s - X_{s1}), \text{ and}$$

$$Y_d = Y_{d1} + \frac{|Y_{d4} - Y_{d1}|}{|Y_{s4} - Y_{s1}|} * (Y_s - Y_{s1}),$$

wherein

$(X_d, Y_d)$ are the second coordinates, $(X_s, Y_s)$ are the first coordinates, $(X_{d1}, Y_{d1})$ and $(X_{d4}, Y_{d4})$ are respectively the coordinates of the two vertices of the diagonal of the second sub-area, and $(X_{s1}, Y_{s1})$ and $(X_{s4}, Y_{s4})$ are respectively the coordinates of the two vertices of the diagonal of the first sub-area.

4. The method according to claim 2, wherein when both the first sub-area and the second sub-area are rectangles, the area parameter of the first sub-area comprises a length and a width of the first sub-area and coordinates of one vertex of the first sub-area, and the area parameter of the second sub-area comprises a length and a width of the second sub-area and coordinates of one vertex of the second sub-area, the first mapping relationship is represented by using the following formulas:

$$X_d = X^1_{d1} + \frac{W^1_1}{W^1_2} * (X_s - X^1_{s1})$$

, and

$$Y_d = Y^1_{d1} + \frac{L^1_1}{L^1_2} * (Y_s - Y^1_{s1}),$$

wherein

$(X_d, Y_d)$ are the second coordinates, $(X_s, Y_s)$ are the first coordinates, $W^1_1$ is a length of a side of the second sub-area in an x-axis direction, $W^1_2$ is a length of a side of the first sub-area in the x-axis direction, $L^1_1$ is a length of a side of the second sub-area in a y-axis direction, $L^1_2$ is a length of a side of the first sub-area in the y-axis direction, $(X^1_{d1}, Y^1_{d1})$ are the coordinates of the one vertex of the second sub-area, $(X^1_{s1}, Y^1_{s1})$ are the coordinates of the one vertex of the first sub-area, and there is a mapping relationship between $(X^1_{d1}, Y^1_{d1})$ and $(X^1_{s1}, Y^1_{s1})$.

5. The method according to claim 2, wherein when the first sub-area is a rectangle and the second sub-area is a line segment in an x-axis direction, the area parameter of the first sub-area comprises a length and a width of the first sub-area and coordinates of one vertex of the first sub-area, and the area parameter of the second sub-area comprises a length of the horizontal line, the first mapping relationship is represented by using the following formulas:

$$X_d = X^2_{d1} + \frac{W^2_1}{W^2_2} * (X_s - X^2_{s1}),$$

and

$$Y_d = Y^2_{d1},$$

wherein

$(X_d, Y_d)$ are the second coordinates, $(X_s, Y_s)$ are the first coordinates, $W^2_1$ is the length of the line segment, $W^2_2$ is a length of a side of the first sub-area in the x-axis direction, $(X^2_{d1}, Y^2_{d1})$ are coordinates of one vertex of the second sub-area, $(X^2_{s1}, Y^2_{s1})$ are the coordinates of the one vertex of the first sub-area, and there is a mapping relationship between $(X^2_{d1}, Y^2_{d1})$ and $(X^2_{s1}, Y^2_{s1})$ ; or
when the first sub-area is a rectangle and the second sub-area is a line segment in a y-axis direction, the area parameter of the first sub-area comprises a length and a width of the first sub-area and coordinates of one vertex of the first sub-area, and the area parameter of the second sub-area comprises a length of the vertical line, the first mapping relationship is represented by using the following formulas:

$$X_d = X^3_{d1},$$

and

$$Y_d = Y^3_{d1} + \frac{L^3_1}{L^3_2} * (Y_s - Y^3_{s1}).$$

, wherein
$(X_d, Y_d)$ are the second coordinates, $(X_s, Y_s)$ are the first coordinates, $L^3_1$ is the length of the line segment, $L^3_2$ is a length of a side of the first sub-area in the y-axis direction, $(X^3_{d1}, Y^3_{d1})$ are coordinates of one vertex of the second sub-area, $(X^3_{s1}, Y^3_{s1})$ are the coordinates of the one vertex of the first sub-area, and there is a mapping relationship between $(X^3_{d1}, Y^3_{d1})$ and $(X^3_{d1}, Y^3_{s1})$.

6. The method according to claim 2, wherein when the first sub-area is a rectangle and the second sub-area is a coordinate point, and the area parameter of the second sub-area comprises coordinates of the coordinate point, the first mapping relationship is represented by using the following formulas:

$$X_d = X^4_{d1},$$

and

$$Y_d = Y^4_{d1}.$$

, wherein
$(X_d, Y_d)$ are the second coordinates, and $(X^4_{d1}, Y^4_{d1})$ are the coordinates of the coordinate point.

7. The method according to claim 2, further comprising:

highlighting (S31), by the electronic device, the first sub-area and the second sub-area after receiving a first setting operation;

receiving (S32), by the electronic device, a first selection operation for a third sub-area in the second touch area, and receiving a second selection operation for a fourth sub-area in the first touch area;

adjusting (S33), by the electronic device, the first mapping relationship based on an area parameter of the third sub-area and an area parameter of the fourth sub-area;

after receiving a third touch operation for the fourth sub-area, calculating (S34), by the electronic device based on an adjusted first mapping relationship, fourth coordinates having a mapping relationship with third coordinates, wherein the third coordinates are coordinates of the third touch operation in the fourth sub-area, and the fourth coordinates are located in the third sub-area of the electronic device; and

executing (S35), by the electronic device, a response corresponding to the fourth coordinates.

8. The method according to claim 1, wherein

when the electronic device is in a landscape mode, determining, by the electronic device, that the current application mode is the first mode; or

when the electronic device runs a preset application, determining, by the electronic device, that the current application mode is the first mode.

9. An electronic device, comprising:

a processor (100) and a display (200) that has a touch function, wherein

the display (200) comprises a first touch area and a second touch area, and

the processor (100) is configured to: after the electronic device receives a first touch operation for the first touch area, determine first coordinates of the first touch operation in the first touch area; determine, based on a first mapping relationship, second coordinates having a mapping relationship with the first coordinates, wherein the second coordinates are located in the second touch area of the electronic device; and then execute a response corresponding to the second coordinates;

wherein executing the response corresponding to the second coordinates comprises:

determining, by the processor (100), whether a second touch operation for the second touch area is received within a first time period after the first touch operation is received; and

when determining that the second touch operation is received, executing, by the processor (100), a function corresponding to the second coordinates and the second touch operation, wherein the processor (100) is configured to jointly determine the function based on the second coordinates and coordinates of the second touch operation, wherein the second coordinates and the coordinates of the second touch operation are coordinates indicated by a key combination, which are locations at which a plurality of coordinates are located on the electronic device and that need to be simultaneously touched;

before determining, based on the first mapping relationship, the second coordinates having the mapping relationship with the first coordinates, the processor (100) is further configured to determine a current application mode, and when the current application mode is a first mode, the processor (100) determines, based on the first mapping relationship, the second coordinates having the mapping relationship with the first coordinates,

wherein the first touch area is a side touch area of the electronic device and disposed on a side of the electronic device, and the second touch area is a front touch area of the electronic device and disposed on the front of the electronic device.

10. The electronic device according to claim 9, wherein

the first mapping relationship comprises an area parameter of a first sub-area and an area parameter of a second sub-area;

the first sub-area is a part of the first touch area, and the second sub-area is a part of the second touch area; and

the first coordinates are located in the first sub-area, and the second coordinates are located in the second sub-area.

11. The electronic device according to claim 10, wherein when both the first sub-area and the second sub-area are rectangles, the area parameter of the first sub-area comprises coordinates of two vertices of a diagonal of the first sub-area, and the area parameter of the second sub-area comprises coordinates of two vertices of a diagonal of the second sub-area, the first mapping relationship is represented by using the following formulas:

$$X_d = X_{d1} + \frac{\left|X_{d4} - X_{d1}\right|}{\left|X_{s4} - X_{s1}\right|} * (X_s - X_{s1}),$$

and

$$Y_d = Y_{d1} + \frac{\left|Y_{d4} - Y_{d1}\right|}{\left|Y_{s4} - Y_{s1}\right|} * (Y_s - Y_{s1}),$$

wherein
$(X_d, Y_d)$ are the second coordinates, $(X_s, Y_s)$ are the first coordinates, $(X_{d1}, Y_{d1})$ and $(X_{d4}, Y_{d4})$ are respectively the coordinates of the two vertices of the diagonal of the second sub-area, and $(X_{s1}, Y_{s1})$ and $(X_{s4}, Y_{s4})$ are respectively the coordinates of the two vertices of the diagonal of the first sub-area.

12. The electronic device according to claim 10, wherein when both the first sub-area and the second sub-area are rectangles, the area parameter of the first sub-area comprises a length and a width of the first sub-area and coordinates of one vertex of the first sub-area, and the area parameter of the second sub-area comprises a length and a width of the second sub-area and coordinates of one vertex of the second sub-area, the first mapping relationship is represented by using the following formulas:

$$X_d = X^1_{d1} + \frac{W^1_1}{W^1_2} * (X_s - X^1_{s1}),$$

and

$$Y_d = Y^1_{d1} + \frac{L^1_1}{L^1_2} * (Y_s - Y^1_{s1}),$$

wherein
$(X_d, Y_d)$ are the second coordinates, $(X_s, Y_s)$ are the first coordinates, $W^1_1$ is a length of a side of the second sub-area in an x-axis direction, $W^1_2$ is a length of a side of the first sub-area in the x-axis direction, $L^1_1$ is a length of a side of the second sub-area in a y-axis direction, $L^1_2$ is a length of a side of the first sub-area in the y-axis direction, $(X^1_{d1}, Y^1_{d1})$ are the coordinates of the one vertex of the second sub-area, $(X^1_{s1}, Y^1_{s1})$ are the coordinates of the one vertex of the first sub-area, and there is a mapping relationship between $(X^1_{d1}, Y^1_{d1})$ and $(X^1_{s1}, Y^1_{s1})$.

13. The electronic device according to claim 10, wherein when the first sub-area is a rectangle and the second sub-area is a line segment in an x-axis direction, the area parameter of the first sub-area comprises a length and a width of the first sub-area and coordinates of one vertex of the first sub-area, and the area parameter of the second sub-area comprises a length of the horizontal line, the first mapping relationship is represented by using the following formulas:

$$X_d = X^2_{d1} + \frac{W^2_1}{W^2_2} * (X_s - X^2_{s1}),$$

and

$$Y_d = Y^2_{d1},$$

wherein
$(X_d, Y_d)$ are the second coordinates, $(X_s, Y_s)$ are the first coordinates, $W^2_1$ is the length of the line segment, $W^2_2$ is a length of a side of the first sub-area in the x-axis direction, $(X^2_{d1}, Y^2_{d1})$ are coordinates of one vertex of the second sub-area, $(X^2_{s1}, Y^2_{s1})$ are the coordinates of the one vertex of the first sub-area, and there is a mapping relationship

between $(X^2_{d1}, Y^2_{d1})$ and $(X^2_{s1}, Y^2_{s1})$ ; or when the first sub-area is a rectangle and the second sub-area is a line segment in a y-axis direction, the area parameter of the first sub-area comprises a length and a width of the first sub-area and coordinates of one vertex of the first sub-area, and the area parameter of the second sub-area comprises a length of the vertical line, the first mapping relationship is represented by using the following formulas:

$$X_d = X^3_{d1},$$

and

$$Y_d = Y^3_{d1} + \frac{L^3_1}{L^3_2} * (Y_s - Y^3_{s1}),$$

wherein

$(X_d , Y_d)$ are the second coordinates, $(X_s, Y_s)$ are the first coordinates, $L^3_1$ is the length of the line segment, $L^3_2$ is a length of a side of the first sub-area in the y-axis direction, $(X^3_{d1}, Y^3_{d1})$ are coordinates of one vertex of the second sub-area, $(X^3_{s1}, Y^3_{s1})$ are the coordinates of the one vertex of the first sub-area, and there is a mapping relationship between $(X^3_{d1}, Y^3_{d1})$ and $(X^3_{s1}, Y^3_{s1})$.

14. The electronic device according to claim 10, wherein when the first sub-area is a rectangle and the second sub-area is a coordinate point, and the area parameter of the second sub-area comprises coordinates of the coordinate point, the first mapping relationship is represented by using the following formulas:

$$X_d = X^4_{d1},$$

and

$$Y_d = Y^4_{d1},$$

wherein

$(X_d, Y_d)$ are the second coordinates, and $(X^4_{d1}, Y^4_{d1})$ are the coordinates of the coordinate point.

15. A computer-readable storage medium storing instructions, which, when being run on a processor of an electronic device comprising a display that has a touch function, wherein the display comprises a first touch area and a second touch area, the first touch area being disposed on a side of the electronic device, and the second touch area being disposed on a front of the electronic device, enable the processor to perform the method according to any of claims 1-8.


**Patentansprüche**

1. Verfahren zum Steuern einer elektronischen Vorrichtung, das Folgendes umfasst:

nach Empfang eines ersten Berührungsbedienvorgangs für einen ersten Berührungsbereich, Bestimmen (S11, S21), durch eine elektronische Vorrichtung, die eine Anzeige umfasst, von ersten Koordinaten des ersten Berührungsbedienvorgangs in dem ersten Berührungsbereich;

Bestimmen (S12, S22), durch die elektronische Vorrichtung basierend auf einer ersten Abbildungsbeziehung, von zweiten Koordinaten, die eine Abbildungsbeziehung mit den ersten Koordinaten aufweisen, wobei die zweiten Koordinaten in einem zweiten Berührungsbereich der elektronischen Vorrichtung liegen, wobei die Anzeige den ersten Berührungsbereich und den zweiten Berührungsbereich umfasst; und

Ausführen (S13, S25), durch die elektronische Vorrichtung, einer Antwort, die den zweiten Koordinaten entspricht;

wobei das Ausführen (S13, S25), durch die elektronische Vorrichtung, einer Antwort, die den zweiten Koordinaten entspricht, Folgendes umfasst:

Bestimmen (S23), durch die elektronische Vorrichtung, ob ein zweiter Berührungsbedienvorgang für den zweiten Berührungsbereich innerhalb eines ersten Zeitraums nach Empfang des ersten Berührungsbedienvorgangs empfangen wird; und

wenn bestimmt wird, dass der zweite Berührungsbedienvorgang empfangen wird, Ausführen (S24), durch die elektronische Vorrichtung, einer Funktion, die den zweiten Koordinaten und dem zweiten Berührungsbedienvorgang entspricht, wobei die elektronische Vorrichtung die Funktion gemeinsam basierend auf den zweiten Koordinaten und Koordinaten des zweiten Berührungsbedienvorgangs bestimmt, wobei die zweiten Koordinaten und die Koordinaten des zweiten Berührungsbedienvorgangs durch eine Schlüsselkombination angegebene Koordinaten sind, bei denen es sich um Stellen handelt, an denen mehrere Koordinaten auf der elektronischen Vorrichtung liegen und die gleichzeitig berührt werden müssen;

wobei das Verfahren vor dem Bestimmen (S12, S22), durch die elektronische Vorrichtung basierend auf einer ersten Abbildungsbeziehung, von zweiten Koordinaten, die eine Abbildungsbeziehung mit den ersten Koordinaten aufweisen, ferner Folgendes umfasst:

Bestimmen, durch die elektronische Vorrichtung, eines aktuellen Anwendungsmodus; und

wenn der aktuelle Anwendungsmodus ein erster Modus ist, Bestimmen, durch die elektronische Vorrichtung basierend auf der ersten Abbildungsbeziehung, der zweiten Koordinaten, die die Abbildungsbeziehung mit den ersten Koordinaten aufweisen,

wobei der erste Berührungsbereich ein Seitenberührungsbereich der elektronischen Vorrichtung ist und an einer Seite der elektronischen Vorrichtung angeordnet ist und der zweite Berührungsbereich ein vorderer Berührungsbereich der elektronischen Vorrichtung ist und an der Vorderseite der elektronischen Vorrichtung angeordnet ist.

2. Verfahren nach Anspruch 1, wobei

die erste Abbildungsbeziehung einen Bereichsparameter eines ersten Teilbereichs und einen Bereichsparameter eines zweiten Teilbereichs umfasst;

der erste Teilbereich Teil des ersten Berührungsbereichs ist und der zweite Teilbereich Teil des zweiten Berührungsbereichs ist; und

die ersten Koordinaten in dem ersten Teilbereich liegen und die zweiten Koordinaten in dem zweiten Teilbereich liegen.

3. Verfahren nach Anspruch 2, wobei, wenn sowohl der erste Teilbereich als auch der zweite Teilbereich Rechtecke sind, der Bereichsparameter des ersten Teilbereichs Koordinaten von zwei Eckpunkten einer Diagonalen des ersten Teilbereichs umfasst und der Bereichsparameter des zweiten Teilbereichs Koordinaten von zwei Eckpunkten einer Diagonalen des zweiten Teilbereichs umfasst, die erste Abbildungsbeziehung unter Verwendung der folgenden Formeln dargestellt wird:

$$X_d = X_{d1} + \frac{|X_{d4} - X_{d1}|}{|X_{s4} - X_{s1}|} * (X_s - X_{s1})$$

und

$$Y_d = Y_{d1} + \frac{|Y_{d4} - Y_{d1}|}{|Y_{s4} - Y_{s1}|} * (Y_s - Y_{s1}),$$

wobei

$(X_d, Y_d)$ die zweiten Koordinaten sind, $(X_s, Y_s)$ die ersten Koordinaten sind, $(X_{d1}, Y_{d1})$ und $(X_{d4}, Y_{d4})$ jeweils die Koordinaten der zwei Eckpunkte der Diagonalen des zweiten Teilbereichs sind und $(X_{s1}, Y_{s1})$ und $(X_{s4}, Y_{s4})$ jeweils die Koordinaten der zwei Eckpunkte der Diagonalen des ersten Teilbereichs sind.

4. Verfahren nach Anspruch 2, wobei, wenn sowohl der erste Teilbereich als auch der zweite Teilbereich Rechtecke sind, der Bereichsparameter des ersten Teilbereichs eine Länge und eine Breite des ersten Teilbereichs und Koordinaten eines Eckpunkts des ersten Teilbereichs umfasst und der Bereichsparameter des zweiten Teilbereichs eine Länge und eine Breite des zweiten Teilbereichs und Koordinaten eines Eckpunkts des zweiten Teilbereichs umfasst, die erste Abbildungsbeziehung unter Verwendung der folgenden Formeln dargestellt wird:

$$X_d = X^1{}_{d1} + \frac{W^1{}_1}{W^1{}_2} * (X_s - X^1{}_{s1})$$

und

$$Y_d = Y^1{}_{d1} + \frac{L^1{}_1}{L^1{}_2} * (Y_s - Y^1{}_{s1}),$$

wobei

$(X_d, Y_d)$ die zweiten Koordinaten sind, $(X_s, Y_s)$ die ersten Koordinaten sind, $W^1{}_1$ eine Länge einer Seite des zweiten Teilbereichs in einer x-Achsen-Richtung ist, $W^1{}_2$ eine Länge einer Seite des ersten Teilbereichs in der x-Achsen-Richtung ist, $L^1{}_1$ eine Länge einer Seite des zweiten Teilbereichs in einer y-Achsen-Richtung ist, $L^1{}_2$ eine Länge einer Seite des ersten Teilbereichs in der y-Achsen-Richtung ist, $(X^1{}_{d1}, Y^1{}_{d1})$ die Koordinaten des einen Eckpunkts des zweiten Teilbereichs sind, $(X^1{}_{s1}, Y^1{}_{s1})$ die Koordinaten des einen Eckpunkts des ersten Teilbereichs sind und eine Abbildungsbeziehung zwischen $(X^1{}_{d1}, Y^1{}_{d1})$ und $(X^1{}_{s1}, Y^1{}_{s1})$ besteht.

5. Verfahren nach Anspruch 2, wobei, wenn der erste Teilbereich ein Rechteck ist und der zweite Teilbereich ein Liniensegment in einer x-Achsen-Richtung ist, der Bereichsparameter des ersten Teilbereichs eine Länge und eine Breite des ersten Teilbereichs und Koordinaten eines Eckpunkts des ersten Teilbereichs umfasst und der Bereichsparameter des zweiten Teilbereichs eine Länge der horizontalen Linie umfasst, die erste Abbildungsbeziehung unter Verwendung der folgenden Formeln dargestellt wird:

$$X_d = X^2{}_{d1} + \frac{W^2{}_1}{W^2{}_2} * (X_s - X^2{}_{s1})$$

und

$$Y_d = Y^2{}_{d1},$$

wobei

$(X_d, Y_d)$ die zweiten Koordinaten sind, $(X_s, Y_s)$ die ersten Koordinaten sind, $W^2{}_1$ die Länge des Liniensegments ist, $W^2{}_2$ eine Länge einer Seite des ersten Teilbereichs in der x-Achsen-Richtung ist, $(X^2{}_{d1}, Y^2{}_{d1})$ Koordinaten eines Eckpunkts des zweiten Teilbereichs sind, $(X^2{}_{s1}, Y^2{}_{s1})$ die Koordinaten des einen Eckpunkts des ersten Teilbereichs sind und eine Abbildungsbeziehung zwischen $(X^2{}_{d1}, Y^2{}_{d1})$ und $(X^2{}_{s1}, Y^2{}_{s1})$ besteht; oder wenn der erste Teilbereich ein Rechteck ist und der zweite Teilbereich ein Liniensegment in einer y-Achsen-Richtung ist, der Bereichsparameter des ersten Teilbereichs eine Länge und eine Breite des ersten Teilbereichs und Koordinaten eines Eckpunkts des ersten Teilbereichs umfasst und der Bereichsparameter des zweiten Teilbereichs eine Länge der vertikalen Linie umfasst, die erste Abbildungsbeziehung unter Verwendung der folgenden Formeln dargestellt wird:

$$X_d = X^3{}_{d1}$$

und

$$Y_d = Y^3{}_{d1} + \frac{L^3{}_1}{L^3{}_2} * (Y_s - Y^3{}_{s1}),$$

wobei
$(X_d, Y_d)$ die zweiten Koordinaten sind, $(X_s, Y_s)$ die ersten Koordinaten sind, $L^3{}_1$ die Länge des Liniensegments ist, $L^3{}_2$ eine Länge einer Seite des ersten Teilbereichs in der y-Achsen-Richtung ist, $(X^3{}_{d1}, Y^3{}_{d1})$ Koordinaten eines Eckpunkts des zweiten Teilbereichs sind, $(X^3{}_{s1}, Y^3{}_{s1})$ die Koordinaten des einen Eckpunkts des ersten Teilbereichs sind und eine Abbildungsbeziehung zwischen $(X^3{}_{d1}, Y^3{}_{d1})$ und $(X^3{}_{s1}, Y^3{}_{s1})$ besteht.

6. Verfahren nach Anspruch 2, wobei, wenn der erste Teilbereich ein Rechteck ist und der zweite Teilbereich ein Koordinatenpunkt ist und der Bereichsparameter des zweiten Teilbereichs Koordinaten des Koordinatenpunkts umfasst, die erste Abbildungsbeziehung unter Verwendung der folgenden Formeln dargestellt wird:

$$X_d = X^4{}_{d1}$$

und

$$Y_d = Y^4{}_{d1},$$

wobei

$(X_d, Y_d)$ die zweiten Koordinaten sind und $(X^4{}_{d1}, Y^4{}_{d1})$ die Koordinaten des Koordinatenpunkts sind.

7. Verfahren nach Anspruch 2, das ferner Folgendes umfasst:

   Hervorheben (S31), durch die elektronische Vorrichtung, des ersten Teilbereichs und des zweiten Teilbereichs nach Empfang eines ersten Einstellungsbedienvorgangs;
   Empfangen (S32), durch die elektronische Vorrichtung, eines ersten Auswahlbedienvorgangs für einen dritten Teilbereich in dem zweiten Berührungsbereich und Empfangen eines zweiten Auswahlbedienvorgangs für einen vierten Teilbereich in dem ersten Berührungsbereich;
   Anpassen (S33), durch die elektronische Vorrichtung, der ersten Abbildungsbeziehung basierend auf einem Bereichsparameter des dritten Teilbereichs und einem Bereichsparameter des vierten Teilbereichs;
   nach Empfang eines dritten Berührungsbedienvorgangs für den vierten Teilbereich, Berechnen (S34), durch die elektronische Vorrichtung basierend auf einer angepassten ersten Abbildungsbeziehung, von vierten Koordinaten, die eine Abbildungsbeziehung mit dritten Koordinaten aufweisen, wobei die dritten Koordinaten Koordinaten des dritten Berührungsbedienvorgangs in dem vierten Teilbereich sind und die vierten Koordinaten in dem dritten Teilbereich der elektronischen Vorrichtung liegen; und
   Ausführen (S35), durch die elektronische Vorrichtung, einer Antwort, die den vierten Koordinaten entspricht.

8. Verfahren nach Anspruch 1, wobei

   wenn die elektronische Vorrichtung in einem Querformatmodus ist, Bestimmen, durch die elektronische Vorrichtung, dass der aktuelle Anwendungsmodus der erste Modus ist; oder
   wenn die elektronische Vorrichtung eine voreingestellte Anwendung ausführt, Bestimmen, durch die elektronische Vorrichtung, dass der aktuelle Anwendungsmodus der erste Modus ist.

9. Elektronische Vorrichtung, die Folgendes umfasst:

   einen Prozessor (100) und eine Anzeige (200), die eine Berührungsfunktion aufweist, wobei
   die Anzeige (200) einen ersten Berührungsbereich und einen zweiten Berührungsbereich umfasst, und
   der Prozessor (100) zu Folgendem ausgelegt ist: nachdem die elektronische Vorrichtung einen ersten Berührungsbedienvorgang für den ersten Berührungsbereich empfängt, Bestimmen von ersten Koordinaten des ersten Berührungsbedienvorgangs in dem ersten Berührungsbereich; Bestimmen, basierend auf einer ersten Abbildungsbeziehung, von zweiten Koordinaten, die eine Abbildungsbeziehung mit den ersten Koordinaten aufweisen, wobei die zweiten Koordinaten in dem zweiten Berührungsbereich der elektronischen Vorrichtung liegen; und dann Ausführen einer Antwort, die den zweiten Koordinaten entspricht;
   wobei das Ausführen der Antwort, die den zweiten Koordinaten entspricht Folgendes umfasst:

   Bestimmen, durch den Prozessor (100), ob ein zweiter Berührungsbedienvorgang für den zweiten Berührungsbereich innerhalb eines ersten Zeitraums nach Empfang des ersten Berührungsbedienvorgangs empfangen wird; und
   wenn bestimmt wird, dass der zweite Berührungsbedienvorgang empfangen wird, Ausführen, durch den Prozessor (100), einer Funktion, die den zweiten Koordinaten und dem zweiten Berührungsbedienvorgang entspricht, wobei der Prozessor (100) dazu ausgelegt ist, die Funktion gemeinsam basierend auf den zweiten Koordinaten und Koordinaten des zweiten Berührungsbedienvorgangs zu bestimmen, wobei die zweiten Koordinaten und die Koordinaten des zweiten Berührungsbedienvorgangs durch eine Schlüsselkombination angegebene Koordinaten sind, bei denen es sich um Stellen handelt, an denen mehrere Koordinaten auf der elektronischen Vorrichtung liegen und die gleichzeitig berührt werden müssen;

wobei der Prozessor (100) vor dem Bestimmen, basierend auf der ersten Abbildungsbeziehung, der zweiten Koordinaten, die die Abbildungsbeziehung mit den ersten Koordinaten aufweisen, ferner dazu ausgelegt ist, einen aktuellen Anwendungsmodus zu bestimmen, und wenn der aktuelle Anwendungsmodus ein erster Modus ist, der Prozessor (100) basierend auf der ersten Abbildungsbeziehung die zweiten Koordinaten bestimmt, die die Abbildungsbeziehung mit den ersten Koordinaten aufweisen,

wobei der erste Berührungsbereich ein Seitenberührungsbereich der elektronischen Vorrichtung ist und an einer Seite der elektronischen Vorrichtung angeordnet ist und der zweite Berührungsbereich ein vorderer Berührungsbereich der elektronischen Vorrichtung ist und an der Vorderseite der elektronischen Vorrichtung angeordnet ist.

10. Elektronische Vorrichtung nach Anspruch 9, wobei

die erste Abbildungsbeziehung einen Bereichsparameter eines ersten Teilbereichs und einen Bereichsparameter eines zweiten Teilbereichs umfasst;

der erste Teilbereich Teil des ersten Berührungsbereichs ist und der zweite Teilbereich Teil des zweiten Berührungsbereichs ist; und

die ersten Koordinaten in dem ersten Teilbereich liegen und die zweiten Koordinaten in dem zweiten Teilbereich liegen.

11. Elektronische Vorrichtung nach Anspruch 10, wobei, wenn sowohl der erste Teilbereich als auch der zweite Teilbereich Rechtecke sind, der Bereichsparameter des ersten Teilbereichs Koordinaten von zwei Eckpunkten einer Diagonalen des ersten Teilbereichs umfasst und der Bereichsparameter des zweiten Teilbereichs Koordinaten von zwei Eckpunkten einer Diagonalen des zweiten Teilbereichs umfasst, die erste Abbildungsbeziehung unter Verwendung der folgenden Formeln dargestellt wird:

$$X_d = X_{d1} + \frac{|X_{d4}-X_{d1}|}{|X_{s4}-X_{s1}|} * (X_s - X_{s1})$$

und

$$Y_d = Y_{d1} + \frac{|Y_{d4}-Y_{d1}|}{|Y_{s4}-Y_{s1}|} * (Y_s - Y_{s1}),$$

wobei

$(X_d, Y_d)$ die zweiten Koordinaten sind, $(X_s, Y_s)$ die ersten Koordinaten sind, $(X_{d1}, Y_{d1})$ und $(X_{d4}, Y_{d4})$ jeweils die Koordinaten der zwei Eckpunkte der Diagonalen des zweiten Teilbereichs sind und $(X_{s1}, Y_{s1})$ und $(X_{s4}, Y_{s4})$ jeweils die Koordinaten der zwei Eckpunkte der Diagonalen des ersten Teilbereichs sind.

12. Elektronische Vorrichtung nach Anspruch 10, wobei, wenn sowohl der erste Teilbereich als auch der zweite Teilbereich Rechtecke sind, der Bereichsparameter des ersten Teilbereichs eine Länge und eine Breite des ersten Teilbereichs und Koordinaten eines Eckpunkts des ersten Teilbereichs umfasst und der Bereichsparameter des zweiten Teilbereichs eine Länge und eine Breite des zweiten Teilbereichs und Koordinaten eines Eckpunkts des zweiten Teilbereichs umfasst, die erste Abbildungsbeziehung unter Verwendung der folgenden Formeln dargestellt wird:

$$X_d = X^1_{d1} + \frac{W^1_1}{W^1_2} * (X_s - X^1_{s1})$$

und

$$Y_d = Y^1_{d1} + \frac{L^1_1}{L^1_2} * (Y_s - Y^1_{s1}),$$

wobei

$(X_d, Y_d)$ die zweiten Koordinaten sind, $(X_s, Y_s)$ die ersten Koordinaten sind, $W^1_1$ eine Länge einer Seite des zweiten Teilbereichs in einer x-Achsen-Richtung ist, $W^1{}_2$ eine Länge einer Seite des ersten Teilbereichs in der x-Achsen-Richtung ist, $L^1{}_1$ eine Länge einer Seite des zweiten Teilbereichs in einer y-Achsen-Richtung ist, $L^1{}_2$ eine Länge einer Seite des ersten Teilbereichs in der y-Achsen-Richtung ist, $(X^1{}_{d1}, Y^1{}_{d1})$ die Koordinaten des einen Eckpunkts des zweiten Teilbereichs sind, $(X^1{}_{s1}, Y^1{}_{s1})$ die Koordinaten des einen Eckpunkts des ersten Teilbereichs sind und eine Abbildungsbeziehung zwischen $(X^1{}_{d1}, Y^1{}_{d1})$ und $(X^1{}_{s1}, Y^1{}_{s1})$ besteht.

**13.** Elektronische Vorrichtung nach Anspruch 10, wobei, wenn der erste Teilbereich ein Rechteck ist und der zweite Teilbereich ein Liniensegment in einer x-Achsen-Richtung ist, der Bereichsparameter des ersten Teilbereichs eine Länge und eine Breite des ersten Teilbereichs und Koordinaten eines Eckpunkts des ersten Teilbereichs umfasst und der Bereichsparameter des zweiten Teilbereichs eine Länge der horizontalen Linie umfasst, die erste Abbildungsbeziehung unter Verwendung der folgenden Formeln dargestellt wird:

$$X_d = X^2{}_{d1} + \frac{W^2{}_1}{W^2{}_2} * (X_s - X^2{}_{s1})$$

und

$$Y_d = Y^2{}_{d1},$$

wobei

$(X_d, Y_d)$ die zweiten Koordinaten sind, $(X_s, Y_s)$ die ersten Koordinaten sind, $W^2{}_1$ die Länge des Liniensegments ist, $W^2{}_2$ eine Länge einer Seite des ersten Teilbereichs in der x-Achsen-Richtung ist, $(X^2{}_{d1}, Y^2{}_{d1})$ Koordinaten eines Eckpunkts des zweiten Teilbereichs sind, $(X^2{}_{s1}, Y^2{}_{s1})$ die Koordinaten des einen Eckpunkts des ersten Teilbereichs sind und eine Abbildungsbeziehung zwischen $(X^2{}_{d1}, Y^2{}_{d1})$ und $(X^2{}_{s1}, Y^2{}_{s1})$ besteht; oder wenn der erste Teilbereich ein Rechteck ist und der zweite Teilbereich ein Liniensegment in einer y-Achsen-Richtung ist, der Bereichsparameter des ersten Teilbereichs eine Länge und eine Breite des ersten Teilbereichs und Koordinaten eines Eckpunkts des ersten Teilbereichs umfasst und der Bereichsparameter des zweiten Teilbereichs eine Länge der vertikalen Linie umfasst, die erste Abbildungsbeziehung unter Verwendung der folgenden Formeln dargestellt wird:

$$X_d = X^3{}_{d1}$$

und

$$Y_d = Y^3{}_{d1} + \frac{L^3{}_1}{L^3{}_2} * (Y_s - Y^3{}_{s1}),$$

wobei
$(X_d, Y_d)$ die zweiten Koordinaten sind, $(X_s, Y_s)$ die ersten Koordinaten sind, $L^3{}_1$ die Länge des Liniensegments ist, $L^3{}_2$ eine Länge einer Seite des ersten Teilbereichs in der y-Achsen-Richtung ist, $(X^3{}_{d1}, Y^3{}_{d1})$ Koordinaten eines Eckpunkts des zweiten Teilbereichs sind, $(X^3{}_{s1}, Y^3{}_{s1})$ die Koordinaten des einen Eckpunkts des ersten Teilbereichs sind und eine Abbildungsbeziehung zwischen $(X^3{}_{d1}, Y^3{}_{d1})$ und $(X^3{}_{s1}, Y^3{}_{s1})$ besteht.

**14.** Elektronische Vorrichtung nach Anspruch 10, wobei, wenn der erste Teilbereich ein Rechteck ist und der zweite Teilbereich ein Koordinatenpunkt ist und der Bereichsparameter des zweiten Teilbereichs Koordinaten des Koordinatenpunkts umfasst, die erste Abbildungsbeziehung unter Verwendung der folgenden Formeln dargestellt wird:

$$X_d = X^4{}_{d1}$$

und

$$Y_d = Y^4{}_{d1},$$

wobei

$(X_d, Y_d)$ die zweiten Koordinaten sind und $(X^4_{d1}, Y^4_{d1})$ die Koordinaten des Koordinatenpunkts sind.

15. Computerlesbares Speichermedium, das Anweisungen speichert, die bei Ausführung auf einem Prozessor einer elektronischen Vorrichtung, die eine Anzeige umfasst, die eine Berührungsfunktion aufweist, wobei die Anzeige einen ersten Berührungsbereich und einen zweiten Berührungsbereich umfasst, wobei der erste Berührungsbereich an einer Seite der elektronischen Vorrichtung angeordnet ist und der zweite Berührungsbereich an einer Vorderseite der elektronischen Vorrichtung angeordnet ist, ermöglichen, dass der Prozessor das Verfahren nach einem der Ansprüche 1-8 durchführt.

**Revendications**

1. Procédé de commande de dispositif électronique, comprenant :

après réception d'une première opération tactile pour une première zone tactile, la détermination (S11, S21), par un dispositif électronique comprenant un affichage, de premières coordonnées de la première opération tactile dans la première zone tactile ;
la détermination (S12, S22), par le dispositif électronique sur la base d'une première relation de correspondance, de deuxièmes coordonnées présentant une relation de correspondance avec les premières coordonnées, les deuxièmes coordonnées étant situées dans une deuxième zone tactile du dispositif électronique, l'affichage comprenant la première zone tactile et la deuxième zone tactile ; et
l'exécution (S13, S25), par le dispositif électronique, d'une réponse correspondant aux deuxièmes coordonnées ;
l'exécution (S13, S25), par le dispositif électronique, d'une réponse correspondant aux deuxièmes coordonnées comprenant :

la détermination (S23), par le dispositif électronique, si une deuxième opération tactile pour la deuxième zone tactile est ou non reçue dans un premier intervalle de temps après réception de la première opération tactile ; et
en cas de détermination que la deuxième opération tactile est reçue, l'exécution (S24), par le dispositif électronique, d'une fonction correspondant aux deuxièmes coordonnées et à la deuxième opération tactile, le dispositif électronique déterminant la fonction sur la base conjointe des deuxièmes coordonnées et de coordonnées de la deuxième opération tactile, les deuxièmes coordonnées et les coordonnées de la deuxième opération tactile étant des coordonnées indiquées par une combinaison de touches, lesquelles constituent des emplacements auxquels se situent une pluralité de coordonnées sur le dispositif électronique et qui doivent être touchés simultanément ;
le procédé comprenant en outre, avant la détermination (S12, S22), par le dispositif électronique sur la base d'une première relation de correspondance, de deuxièmes coordonnées présentant une relation de correspondance avec les premières coordonnées :

la détermination, par le dispositif électronique, d'un mode d'application courant ; et
lorsque le mode d'application courant est un premier mode, la détermination, par le dispositif électronique sur la base de la première relation de correspondance, des deuxièmes coordonnées présentant la relation de correspondance avec les premières coordonnées,
la première zone tactile étant une zone tactile latérale du dispositif électronique et étant disposée sur un côté du dispositif électronique, et la deuxième zone tactile étant une zone tactile frontale du dispositif électronique et étant disposée sur l'avant du dispositif électronique.

2. Procédé selon la revendication 1, dans lequel

la première relation de correspondance comprend un paramètre de zone d'une première sous-zone et un paramètre de zone d'une deuxième sous-zone ;
la première sous-zone constitue une partie de la première zone tactile, et la deuxième sous-zone constitue une partie de la deuxième zone tactile ; et
les premières coordonnées sont situées dans la première sous-zone, et les deuxièmes coordonnées sont situées dans la deuxième sous-zone.

3. Procédé selon la revendication 2, dans lequel, lorsque la première sous-zone et la deuxième sous-zone sont toutes deux des rectangles, que le paramètre de zone de la première sous-zone comprend des coordonnées de deux sommets d'une diagonale de la première sous-zone, et que le paramètre de zone de la deuxième sous-zone comprend des coordonnées de deux sommets d'une diagonale de la deuxième sous-zone, la première relation de correspondance est représentée par les formules suivantes :

$$X_d = X_{d1} + \frac{|X_{d4} - X_{d1}|}{|X_{s4} - X_{s1}|} * (X_s - X_{s1}),$$

et

$$Y_d = Y_{d1} + \frac{|Y_{d4} - Y_{d1}|}{|Y_{s4} - Y_{s1}|} * (Y_s - Y_{s1}),$$

$(X_d, Y_d)$ représentant les deuxièmes coordonnées, $(X_s, Y_s)$ représentant les premières coordonnées, $(X_{d1}, Y_{d1})$ et $(X_{d4}, Y_{d4})$ représentant respectivement les coordonnées des deux sommets de la diagonale de la deuxième sous-zone, et $(X_{s1}\ Y_{s1})$ et $(X_{s4}, Y_{s4})$ représentant respectivement les coordonnées des deux sommets de la diagonale de la première sous-zone.

**4.** Procédé selon la revendication 2, dans lequel, lorsque la première sous-zone et la deuxième sous-zone sont toutes deux des rectangles, que le paramètre de zone de la première sous-zone comprend une longueur et une largeur de la première sous-zone et des coordonnées d'un sommet donné de la première sous-zone, et que le paramètre de zone de la deuxième sous-zone comprend une longueur et une largeur de la deuxième sous-zone et des coordonnées d'un sommet donné de la deuxième sous-zone, la première relation de correspondance est représentée par les formules suivantes :

$$X_d = X_{d1}^1 + \frac{W_1^1}{W_2^1} * (X_s - X_{s1}^1),$$

et

$$Y_d = Y_{d1}^1 + \frac{L_1^1}{L_2^1} * (Y_s - Y_{s1}^1),$$

$(X_d, Y_d)$ représentant les deuxièmes coordonnées, $(X_s, Y_s)$ représentant les premières coordonnées, $W_1^1$ représentant une longueur d'un côté de la deuxième sous-zone dans une direction d'axe x, $W_2^1$ représentant une longueur d'un côté de la première sous-zone dans la direction d'axe x, $L_1^1$ représentant une longueur d'un côté de la deuxième sous-zone dans une direction d'axe y, $L_2^1$ représentant une longueur d'un côté de la première sous-zone dans la direction d'axe y, $(X_{d1}^1, Y_{d1}^1)$ représentant les coordonnées du sommet donné de la deuxième sous-zone, $(X_{s1}^1, Y_{s1}^1)$ représentant les coordonnées du sommet donné de la première sous-zone, et une relation de correspondance existant entre $(X_{d1}^1, Y_{d1}^1)$ et $(X_{s1}^1, Y_{s1}^1)$.

**5.** Procédé selon la revendication 2, dans lequel, lorsque la première sous-zone est un rectangle et la deuxième sous-zone est un segment de droite dans une direction d'axe x, que le paramètre de zone de la première sous-zone comprend une longueur et une largeur de la première sous-zone et des coordonnées d'un sommet donné de la première sous-zone, et que le paramètre de zone de la deuxième sous-zone comprend une longueur de la droite horizontale, la première relation de correspondance est représentée par les formules suivantes :

$$X_d = X_{d1}^2 + \frac{W_1^2}{W_2^2} * (X_s - X_{s1}^2),$$

et

$$Y_d = Y_{d1}^2,$$

$(X_d,\ Y_d)$ représentant les deuxièmes coordonnées, $(X_s,\ Y_s)$ représentant les premières coordonnées, $W_1^2$ représentant la longueur du segment de droite, $W_2^2$ représentant une longueur d'un côté de la première sous-zone dans la direction d'axe x, ( $X_{d1}^2, Y_{d1}^2$ ) représentant des coordonnées d'un sommet donné de la deuxième sous-zone, ( $X_{s1}^2, Y_{s1}^2$ ) représentant les coordonnées du sommet donné de la première sous-zone, et une relation de correspondance existant entre ( $X_{d1}^2, Y_{d1}^2$ ) et ( $X_{s1}^2, Y_{s1}^2$ ) ; ou

lorsque la première sous-zone est un rectangle et la deuxième sous-zone est un segment de droite dans une direction d'axe y, que le paramètre de zone de la première sous-zone comprend une longueur et une largeur de la première sous-zone et des coordonnées d'un sommet donné de la première sous-zone, et que le paramètre de zone de la deuxième sous-zone comprend une longueur de la droite verticale, la première relation de correspondance est représentée par les formules suivantes :

$$X_d = X_{d1}^3,$$

et

$$Y_d = Y_{d1}^3 + \frac{L_1^3}{L_2^3} * (Y_s - Y_{s1}^3),$$

$(X_d,\ Y_d)$ représentant les deuxièmes coordonnées, $(X_s,\ Y_s)$ représentant les premières coordonnées, $L_1^3$ représentant la longueur du segment de droite, $L_2^3$ représentant une longueur d'un côté de la première sous-zone dans la direction d'axe y, ( $X_{d1}^3, Y_{d1}^3$ ) représentant des coordonnées d'un sommet donné de la deuxième sous-zone, ( $X_{s1}^3, Y_{s1}^3$ ) représentant les coordonnées du sommet donné de la première sous-zone, et une relation de correspondance étant définie entre ( $X_{d1}^3, Y_{d1}^3$ ) et ( $X_{s1}^3, Y_{s1}^3$ ).

6. Procédé selon la revendication 2, dans lequel, lorsque la première sous-zone est un rectangle et la deuxième sous-zone est un point de coordonnées, et que le paramètre de zone de la deuxième sous-zone comprend des coordonnées du point de coordonnées, la première relation de correspondance est représentée par les formules suivantes :

$$X_d = X_{d1}^4,$$

et

$$Y_d = Y_{d1}^4,$$

$(X_d,\ Y_d)$ représentant les deuxièmes coordonnées, et ( $X_{d1}^4, Y_{d1}^4$ ) représentant les coordonnées du point de coordonnées.

7. Procédé selon la revendication 2, comprenant en outre :

la mise en surbrillance (S31), par le dispositif électronique, de la première sous-zone et de la deuxième sous-zone après réception d'une première opération de réglage ;
la réception (S32), par le dispositif électronique, d'une première opération de sélection pour une troisième sous-zone dans la deuxième zone tactile, et la réception d'une deuxième opération de sélection pour une quatrième sous-zone dans la première zone tactile ;

l'ajustement (S33), par le dispositif électronique, de la première relation de correspondance sur la base d'un paramètre de zone de la troisième sous-zone et d'un paramètre de zone de la quatrième sous-zone ;

après réception d'une troisième opération tactile pour la quatrième sous-zone, le calcul (S34), par le dispositif électronique sur la base d'une première relation de correspondance ajustée, de quatrièmes coordonnées présentant une relation de correspondance avec des troisièmes coordonnées, les troisièmes coordonnées étant des coordonnées de la troisième opération tactile dans la quatrième sous-zone, et les quatrièmes coordonnées étant situées dans la troisième sous-zone du dispositif électronique ; et

l'exécution (S35), par le dispositif électronique, d'une réponse correspondant aux quatrièmes coordonnées.

**8.** Procédé selon la revendication 1, dans lequel

lorsque le dispositif électronique est en mode paysage, la détermination, par le dispositif électronique, que le mode d'application courant est le premier mode ; ou

lorsque le dispositif électronique exécute une application prédéfinie, la détermination, par le dispositif électronique, que le mode d'application courant est le premier mode.

**9.** Dispositif électronique, comprenant :

un processeur (100) et un affichage (200) pourvu d'une fonction tactile, dans lequel l'affichage (200) comprend une première zone tactile et une deuxième zone tactile, et le processeur (100) est configuré pour : après réception, par le dispositif électronique, d'une première opération tactile pour la première zone tactile, déterminer des premières coordonnées de la première opération tactile dans la première zone tactile ;

déterminer, sur la base d'une première relation de correspondance, des deuxièmes coordonnées présentant une relation de correspondance avec les premières coordonnées, les deuxièmes coordonnées étant situées dans la deuxième zone tactile du dispositif électronique ; puis exécuter une réponse correspondant aux deuxièmes coordonnées ;

l'exécution de la réponse correspondant aux deuxièmes coordonnées comprenant :

la détermination, par le processeur (100), si une deuxième opération tactile pour la deuxième zone tactile est ou non reçue dans un premier intervalle de temps après réception de la première opération tactile ; et

en cas de détermination que la deuxième opération tactile est reçue, l'exécution, par le processeur (100), d'une fonction correspondant aux deuxièmes coordonnées et à la deuxième opération tactile, le processeur (100) étant configuré pour déterminer la fonction sur la base conjointe des deuxièmes coordonnées et de coordonnées de la deuxième opération tactile, les deuxièmes coordonnées et les coordonnées de la deuxième opération tactile étant des coordonnées indiquées par une combinaison de touches, lesquelles constituent des emplacements auxquels se situent une pluralité de coordonnées sur le dispositif électronique et qui doivent être touchés simultanément ;

avant de déterminer, sur la base de la première relation de correspondance, les deuxièmes coordonnées présentant la relation de correspondance avec les premières coordonnées, le processeur (100) étant configuré en outre pour déterminer un mode d'application courant et, lorsque le mode d'application courant est un premier mode, le processeur (100) déterminant, sur la base de la première relation de correspondance, les deuxièmes coordonnées présentant la relation de correspondance avec les premières coordonnées,

la première zone tactile étant une zone tactile latérale du dispositif électronique et étant disposée sur un côté du dispositif électronique, et la deuxième zone tactile étant une zone tactile frontale du dispositif électronique et étant disposée sur l'avant du dispositif électronique.

**10.** Dispositif électronique selon la revendication 9, dans lequel

la première relation de correspondance comprend un paramètre de zone d'une première sous-zone et un paramètre de zone d'une deuxième sous-zone ;

la première sous-zone constitue une partie de la première zone tactile, et la deuxième sous-zone constitue une partie de la deuxième zone tactile ; et

les premières coordonnées sont situées dans la première sous-zone, et les deuxièmes coordonnées sont situées dans la deuxième sous-zone.

**11.** Dispositif électronique selon la revendication 10, dans lequel, lorsque la première sous-zone et la deuxième sous-zone sont toutes deux des rectangles, que le paramètre de zone de la première sous-zone comprend des coordonnées de deux sommets d'une diagonale de la première sous-zone, et que le paramètre de zone de la deuxième sous-zone comprend des coordonnées de deux sommets d'une diagonale de la deuxième sous-zone, la première relation de correspondance est représentée par les formules suivantes :

$$X_d = X_{d1} + \frac{|X_{d4}-X_{d1}|}{|X_{s4}-X_{s1}|} * (X_s - X_{s1}),$$

et

$$Y_d = Y_{d1} + \frac{|Y_{d4}-Y_{d1}|}{|Y_{s4}-Y_{s1}|} * (Y_s - Y_{s1}),$$

$(X_d, Y_d)$ représentant les deuxièmes coordonnées, $(X_s, Y_s)$ représentant les premières coordonnées, $(X_{d1}, Y_{d1})$ et $(X_{d4}, Y_{d4})$ représentant respectivement les coordonnées des deux sommets de la diagonale de la deuxième sous-zone, et $(X_{s1}, Y_{s1})$ et $(X_{s4}, Y_{s4})$ représentant respectivement les coordonnées des deux sommets de la diagonale de la première sous-zone.

**12.** Dispositif électronique selon la revendication 10, dans lequel, lorsque la première sous-zone et la deuxième sous-zone sont toutes deux des rectangles, que le paramètre de zone de la première sous-zone comprend une longueur et une largeur de la première sous-zone et des coordonnées d'un sommet donné de la première sous-zone, et que le paramètre de zone de la deuxième sous-zone comprend une longueur et une largeur de la deuxième sous-zone et des coordonnées d'un sommet donné de la deuxième sous-zone, la première relation de correspondance est représentée par les formules suivantes :

$$X_d = X_{d1}^1 + \frac{W_1^1}{W_2^1} * (X_s - X_{s1}^1),$$

et

$$Y_d = Y_{d1}^1 + \frac{L_1^1}{L_2^1} * (Y_s - Y_{s1}^1),$$

$(X_d, Y_d)$ représentant les deuxièmes coordonnées, $(X_s, Y_s)$ représentant les premières coordonnées, $W_1^1$ représentant une longueur d'un côté de la deuxième sous-zone dans une direction d'axe x, $W_2^1$ représentant une longueur d'un côté de la première sous-zone dans la direction d'axe x, $L_1^1$ représentant une longueur d'un côté de la deuxième sous-zone dans une direction d'axe y, $L_2^1$ représentant une longueur d'un côté de la première sous-zone dans la direction d'axe y, ( $X_{d1}^1, Y_{d1}^1$ ) représentant les coordonnées du sommet donné de la deuxième sous-zone, ( $X_{s1}^1, Y_{s1}^1$ ) représentant les coordonnées du sommet donné de la première sous-zone, et une relation de correspondance existant entre ( $X_{d1}^1, Y_{d1}^1$ ) et ( $X_{s1}^1, Y_{s1}^1$ ).

**13.** Dispositif électronique selon la revendication 10, dans lequel, lorsque la première sous-zone est un rectangle et la deuxième sous-zone est un segment de droite dans une direction d'axe x, que le paramètre de zone de la première sous-zone comprend une longueur et une largeur de la première sous-zone et des coordonnées d'un sommet donné de la première sous-zone, et que le paramètre de zone de la deuxième sous-zone comprend une longueur de la droite horizontale, la première relation de correspondance est représentée par les formules suivantes :

$$X_d = X_{d1}^2 + \frac{W_1^2}{W_2^2} * (X_s - X_{s1}^2),$$

et

$$Y_d = Y_{d1}^2,$$

$(X_d, Y_d)$ représentant les deuxièmes coordonnées, $(X_s, Y_s)$ représentant les premières coordonnées, $W_1^2$ représentant la longueur du segment de droite, $W_2^2$ représentant une longueur d'un côté de la première sous-zone dans la direction d'axe x, ( $X_{d1}^2, Y_{d1}^2$ ) représentant des coordonnées d'un sommet donné de la deuxième sous-zone, ( $X_{s1}^2, Y_{s1}^2$ ) représentant les coordonnées du sommet donné de la première sous-zone, et une relation de correspondance existant entre ( $X_{d1}^2, Y_{d1}^2$ ) et ( $X_{s1}^2, Y_{s1}^2$ ) ; ou

lorsque la première sous-zone est un rectangle et la deuxième sous-zone est un segment de droite dans une direction d'axe y, que le paramètre de zone de la première sous-zone comprend une longueur et une largeur de la première sous-zone et des coordonnées d'un sommet donné de la première sous-zone, et que le paramètre de zone de la deuxième sous-zone comprend une longueur de la droite verticale, la première relation de correspondance est représentée par les formules suivantes :

$$X_d = X_{d1}^3,$$

et

$$Y_d = Y_{d1}^3 + \frac{L_1^3}{L_2^3} * (Y_s - Y_{s1}^3),$$

$(X_d, Y_d)$ représentant les deuxièmes coordonnées, $(X_s, Y_s)$ représentant les premières coordonnées, $L_1^3$ représentant la longueur du segment de droite, $L_2^3$ représentant une longueur d'un côté de la première sous-zone dans la direction d'axe y, ( $X_{d1}^3, Y_{d1}^3$ ) représentant des coordonnées d'un sommet donné de la deuxième sous-zone, ( $X_{s1}^3, Y_{s1}^3$ ) représentant les coordonnées du sommet donné de la première sous-zone, et une relation de correspondance existant entre ( $X_{d1}^3, Y_{d1}^3$ ) et ( $X_{s1}^3, Y_{s1}^3$ ).

**14.** Dispositif électronique selon la revendication 10, dans lequel, lorsque la première sous-zone est un rectangle et la deuxième sous-zone est un point de coordonnées, et que le paramètre de zone de la deuxième sous-zone comprend des coordonnées du point de coordonnées, la première relation de correspondance est représentée par les formules suivantes :

$$X_d = X_{d1}^4,$$

et

$$Y_d = Y_{d1}^4,$$

$(X_d, Y_d)$ représentant les deuxièmes coordonnées, et ( $X_{d1}^4, Y_{d1}^4$ ) représentant les coordonnées du point de coordonnées.

**15.** Support de stockage lisible par ordinateur stockant des instructions qui, lorsqu'elles sont exécutées sur un processeur d'un dispositif électronique comprenant un affichage pourvu d'une fonction tactile, l'affichage comprenant une première zone tactile et une deuxième zone tactile, la première zone tactile étant disposée sur un côté du dispositif électronique, et la deuxième zone tactile étant disposée sur l'avant du dispositif électronique, permettent au processeur de réaliser le procédé selon l'une quelconque des revendications 1 à 8.

FIG. 1

Terminal device

Antenna 1                                                Antenna 2

| Mobile communications module<br>2G/3G/4G/5G<br>[150] | Wireless communications module<br>BT/WLAN/GNSS/NFC/IR/FM<br>[160] |

| Speaker<br>[170A] | | |
| Receiver<br>[170B] | | |
| Microphone<br>[170C] | Audio module [170] | |
| Headset jack<br>[170D] | | |

Processor

[110]

| Displays 1 to N [194] |
| Cameras 1 to N [193] |
| Indicator [192] |
| Motor [191] |
| Key [190] |
| Internal memory [121] |
| SIM card interfaces 1 to N [195] |
| External memory interface [120] |

| USB interface [130] |

Charging input

| Charging management module [140] |

| Power management module [141] |
| Battery [142] |

Sensor module [180]

| Pressure sensor [180A] |
| Gyro sensor [180B] |
| Barometer sensor [180C] |
| Magnetic sensor [180D] |
| Acceleration sensor [180E] |
| Distance sensor [180F] |
| Optical proximity sensor [180G] |
| Fingerprint sensor [180H] |
| Temperature sensor [180J] |
| Touch sensor [180K] |
| Ambient light sensor [180L] |
| Bone conduction sensor [180M] |

FIG. 2

China Mobile 08:08

FIG. 3

S11

After receiving a first touch operation for a first touch area, an electronic device determines first coordinates of the first touch operation in the first touch area

S12

The electronic device determines, based on a first mapping relationship, second coordinates that have a mapping relationship with the first coordinates

S13

The electronic device executes a response corresponding to the second coordinates

FIG. 4

FIG. 5

S21

After receiving a first touch operation for a first touch area, an electronic device determines first coordinates of the first touch operation in the first touch area

S22

The electronic device determines, based on a first mapping relationship, second coordinates having a mapping relationship with the first coordinates

S23

Whether a second touch operation for a second touch area is received

No

Yes

S24

The electronic device executes a function corresponding to the second coordinates and the second touch operation

S25

The electronic device executes a function corresponding to the second coordinates

FIG. 6

FIG. 7

S31

An electronic device highlights a first sub-area and a second sub-area after receiving a first setting operation

S32

The electronic device receives a first selection operation for a third sub-area in a second touch area, and receives a second selection operation for a fourth sub-area in a first touch area

S33

The electronic device adjusts a first mapping relationship based on an area parameter of the third sub-area and an area parameter of the fourth sub-area

S34

After receiving a third touch operation for the fourth sub-area, the electronic device calculates, based on an adjusted first mapping relationship, fourth coordinates having a mapping relationship with third coordinates

S35

The electronic device executes a response corresponding to the fourth coordinates

FIG. 8

FIG. 9

FIG. 10

| Application (application layer) | | |
|---|---|---|
| Game | Volume key | ... |

| Application Framework (application framework layer) |
|---|

| Libraries (system library) | Android Runtime (Android runtime layer) |
|---|---|

| Hardware Abstraction Layer (Hardware abstraction layer) | | |
|---|---|---|
| ... | Touch module | ... |

| Linux Kernel (Linux kernel layer) |
|---|

FIG. 11

100

200

Processor

Display

210

First touch area

220

Second touch area

FIG. 12

**REFERENCES CITED IN THE DESCRIPTION**

**Patent documents cited in the description**

- EP 2919109 A1
- US 2017315720 A
- CN 107908355 A